# EUROPEAN PATENT SPECIFICATION

(11) **EP 4 466 921 B1**
(45) Date of publication and mention of the grant of the patent: **24.12.2025**
(21) Application number: 22929271.9
(22) Date of filing: 02.03.2022
(51) Int. Cl.: H04W 72/04

(54) **SYSTEMS AND METHODS FOR HYBRID AUTOMATIC REPEAT REQUEST ACKNOWLEDGEMENT FOR TWO STAGE DOWNLINK CONTROL INFORMATION**
SYSTEME UND VERFAHREN ZUR BESTÄTIGUNG HYBRIDER AUTOMATISCHER WIEDERHOLUNGSANFRAGEN FÜR ZWEISTUFIGE DOWNLINK-STEUERUNGSINFORMATIONEN
SYSTÈMES ET PROCÉDÉS D'ACCUSÉ DE RÉCEPTION DE DEMANDE DE RÉPÉTITION AUTOMATIQUE HYBRIDE POUR DES INFORMATIONS DE COMMANDE DE LIAISON DESCENDANTE À DEUX ÉTAGES

(43) Date of publication of application: 27.11.2024
(73) Proprietor: Huawei Technologies Co., Ltd., Shenzhen, Guangdong 518129 (CN)
(72) Inventor: TANG, Hao, Shenzhen, Guangdong 518129 (CN); MA, Jianglei, Ottawa, Ontario 231 (CA)
(74) Representative: Gill Jennings & Every LLP
(86) International application number: PCT/CN2022/078719
(87) International publication number: WO 2023/164820

(56) References cited:
- WO-A1-2022/133893
- JP-A- 2021 036 732
- US-A1- 2021 204 308
- NEC: "DCI monitoring configuration for mini-slot", 12 February 2017 (2017-02-12), XP051209142, Retrieved from the Internet <URL:http://www.3gpp.org/ftp/Meetings_3GPP_SYNC/RAN1/Docs/> [retrieved on 20170212]
- ITRI: "Discussion on two-stage DCI for NR", 3GPP DRAFT; R1-1708717_DISCUSSION ON TWO-STAGE DCI FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Hangzhou; 20170515 - 20170519, 5 May 2017 (2017-05-05), Mobile Competence Centre ; 650, route des Lucioles ; F-06921 Sophia-Antipolis Cedex ; France , XP051261447
- QUALCOMM: "E-mail discussions on 2-stage DCI for NR", 3GPP DRAFT; R1-1702629 E-MAIL DISC 2-STAGE DCI FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20170213 - 20170217, 15 February 2017 (2017-02-15), Mobile Competence Centre ; 650, route des Lucioles ; F-06921 Sophia-Antipolis Cedex ; France , XP051222023

## Description

### TECHNICAL FIELD

The present disclosure relates generally to wireless communications, and in particular embodiments, to methods and apparatus for transmitting and receiving downlink control information (DCI).

### BACKGROUND

In 3GPP New Radio (NR) Release-15, there are 8 DCI formats as shown in Table 1 below. For each DCI format, a user equipment (UE) needs to know the DCI size, and performs DCI detection using blind decoding. A large number of DCI formats and DCI sizes will increase the UE implementation complexity. For example, a UE needs to perform DCI size alignment for these DCI formats. In NR, the total number of different DCI sizes configured to monitor is no more than 4 for a cell, and the total number of different DCI sizes with Cell-Radio Network Temporary Identifier (C-RNTI) is no more than 3.

**Table 1: DCI formats**

| **DCI format** | **Usage** |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In addition, when introducing new features in 3GPP NR Release 16, new DCI formats are introduced, e.g. DCI format 0_2 and 1_2 for ultra-reliable low latency communications (URLLC) scheduling, which further increases the complexity of UE blind decoding. Furthermore, for carrier aggregation (CA) and dual connectivity (DC), the number of blind decodings for the UE to perform is increased with the number of active carriers.

Hybrid automatic repeat request (HARQ) feedback may be useful to enable retransmission of DCI that has not been received or decoded at a receiver. US 2021/204308 A1 discloses a user terminal that receives a downlink shared channel, and controls monitoring of the downlink shared channel in a time domain resource and frequency domain resource of a cycle configured by higher layer signaling.

### SUMMARY

Embodiments of the present disclosure enable HARQ-ACK feedback from the UE that may be used to provide reliability for the 2^{nd} stage DCI of the two stage DCI structure. In some embodiments, HARQ-ACK and retransmission schemes are provided for the 2^{nd} stage DCI.

According to an aspect of the disclosure, there is provided a method for use in receiving two stage downlink (DL) control information (DCI) according to appended independent claim 1.

In some embodiments, the HARQ configuration information is: when the scheduling information is for the initial transmission, selected from a set of values, the set of values including values of HARQ feedback timing for the second stage DCI; or when the scheduling information is for the retransmission, selected from a set of pairs of values, the set of pairs of values including pairs of values of HARQ feedback timing for the retransmission of the second stage DCI and HARQ timing for the second PDSCH.

In some embodiments, the HARQ configuration information is: when the scheduling information is for the initial transmission, selected from a set of values, the set of values including values of physical uplink control channel (PUCCH) resource information for sending the HARQ feedback for the second stage DCI; or when the scheduling information is for the retransmission, selected from a set of pairs of \values, the set of pairs of values including pairs of values of PUCCH resource information for the retransmission of the second stage DCI and for the PUCCH resource information for the second PDSCH.

In some embodiments, the HARQ feedback timing indicator is a value indicating an offset between a reference slot and an UL slot where an acknowledgement (ACK) feedback or negative acknowledgement (NACK) feedback is scheduled for the data transmission.

In some embodiments, the reference slot is a DL slot where the data transmission is scheduled on the second PDSCH.

In some embodiments, the HARQ configuration information is a bit map value that corresponds to one set of values for the initial transmission or one set of pairs of values for the retransmission.

In some embodiments, if a PUCCH resource of the HARQ feedback for the second stage DCI and the HARQ feedback for the second PDSCH are non-overlapping in time domain, transmitting, by the UE, HARQ feedback on two PUCCH; and if the PUCCH resource of the HARQ feedback for the second stage DCI and the HARQ feedback for the second PDSCH overlap in the time domain, transmitting HARQ feedback on the PUCCH for second stage DCI and not transmitting the HARQ feedback for the second PDSCH.

According to an aspect of the disclosure, there is provided a device including a processor and a computer-readable medium. The computer-readable medium having stored thereon, computer executable instructions, that when executed cause the processor to perform the method as described above. An example of such a device may be a UE.

According to an aspect of the disclosure, there is provided a method for use in transmitting two stage DL DCI according to appended independent claim 7.

In some embodiments, the HARQ configuration information is: when the scheduling information is for the initial transmission, selected from a set of values, the set of values including values of HARQ feedback timing for the second stage DCI; or when the scheduling information is for the retransmission, selected from a set of pairs of values, the set of pairs of values including pairs of values of HARQ feedback timing for the retransmission of the second stage DCI and HARQ timing for the second PDSCH.

In some embodiments, the HARQ configuration information is: when the scheduling information is for the initial transmission, selected from a set of values, the set of values including values of PUCCH resource information for sending the HARQ feedback for the second stage DCI; or when the scheduling information is for the retransmission, selected from a set of pairs of values, the set of pairs of values including pairs of values of PUCCH resource information for the retransmission of the HARQ feedback for the second stage DCI and for the PUCCH resource information for the second PDSCH.

In some embodiments, the HARQ feedback timing indicator is a value indicating an offset between a reference slot and an UL slot where an ACK feedback or NACK feedback is scheduled for the data transmission.

In some embodiments, the reference slot is a DL slot where the data transmission is scheduled on the second PDSCH.

In some embodiments, the HARQ configuration information is a bit map value that corresponds to one set of values for the initial transmission or one set of pairs of values for the retransmission.

In some embodiments, if a PUCCH resource of the HARQ feedback for the second stage DCI and the HARQ feedback for the second PDSCH are non-overlapping in time domain, receiving, by the base station, HARQ feedback on two PUCCH; and if the PUCCH resource of the HARQ feedback for the second stage DCI and HARQ feedback for the second PDSCH overlap in the time domain, receiving, by the base station, HARQ feedback on the PUCCH for second stage DCI.

According to an aspect of the disclosure, there is provided a device including a processor and a computer-readable medium. The computer-readable medium having stored thereon, computer executable instructions, that when executed cause the processor to perform the method as described above. An example of such a device may be a base station.

The invention is defined by the appended independent claims. Further advantageous embodiments are set out in the appended dependent claims.

### BRIEF DESCRIPTION OF THE DRAWINGS

For a more complete understanding of the present embodiments, and the advantages thereof, reference is now made, by way of example, to the following descriptions taken in conjunction with the accompanying drawings, in which:
FIG. 1A is a schematic diagram of a communication system in which embodiments of the disclosure may occur.
FIG. 1B is another schematic diagram of a communication system in which embodiments of the disclosure may occur.
FIG. 2 is a block diagram illustrating units or modules in a device in which embodiments of the disclosure may occur.
FIG. 3 is a block diagram illustrating units or modules in a device in which embodiments of the disclosure may occur.
FIG. 4A shows time frequency resources for a two stage DCI.
FIG. 4B shows time division multiplexing and frequency division multiplexing for a two stage DCI.
FIG. 5 shows a protocol stack showing how the two stage DCI is transmitted.
FIG. 6A is a block diagram illustrating how a two stage DCI is transmitted with a HARQ acknowledgment (ACK) for a 2^{nd} stage DCI being indicated by a UE.
FIG. 6B is a block diagram illustrating how a two stage DCI is transmitted with a HARQ negative acknowledgment (NACK) for a 2^{nd} stage DCI being indicated by a UE.
FIG. 7 illustrates an example for multiple time slots, when a 1^{st} stage DCI and a 2^{nd} stage DCI may be transmitted as well as a HARQ-ACK for the 2^{nd} stage DCI and a HARQ-ACK for a physical downlink shared channel (PDSCH) scheduled by the 2^{nd} stage DCI.
FIG. 8 illustrates another example for multiple time slots, when a 1^{st} stage DCI and a 2^{nd} stage DCI may be transmitted as well as a HARQ-ACK for the 2^{nd} stage DCI and a HARQ-ACK for a physical downlink shared channel (PDSCH) scheduled by the 2^{nd} stage DCI.
FIG. 9 is a block diagram illustrating how a two stage DCI is transmitted with a HARQ negative acknowledgment (NACK) for a 2^{nd} stage DCI being indicated by a UE and illustrating that a 1^{st} stage DCI include information to update the HARQ timing and physical uplink control channel (PUCCH) resource for the PDSCH during a retransmission.
FIG. 10A is a table including a set of three bit values where each three bit value has an associated number of slots value for the timing of the 2^{nd} stage DCI for an initial transmission.
FIG. 10B is a table including a set of three bit values where each three bit value has an associated number of slots value for the timing of the 2^{nd} stage DCI and for the timing of the PDSCH scheduled by the 2^{nd} stage DCI for a retransmission.
FIG. 11 is a signal flow diagram 1100 illustrating communication between a transmitter 1110 and a receiver 1120 using a two stage DCI method according to aspects of the present disclosure.

### DETAILED DESCRIPTION

For illustrative purposes, specific example embodiments will now be explained in greater detail below in conjunction with the figures.

The embodiments set forth herein represent information sufficient to practice the claimed subject matter and illustrate ways of practicing such subject matter. Upon reading the following description in light of the accompanying figures, those of skill in the art will understand the concepts of the claimed subject matter and will recognize applications of these concepts not particularly addressed herein.

Moreover, it will be appreciated that any module, component, or device disclosed herein that executes instructions may include or otherwise have access to a non-transitory computer/processor readable storage medium or media for storage of information, such as computer/processor readable instructions, data structures, program modules, and/or other data. A non-exhaustive list of examples of non-transitory computer/processor readable storage media includes magnetic cassettes, magnetic tape, magnetic disk storage or other magnetic storage devices, optical disks such as compact disc read-only memory (CD-ROM), digital video discs or digital versatile discs (i.e. DVDs), Blu-ray Disc^{™}, or other optical storage, volatile and non-volatile, removable and non-removable media implemented in any method or technology, random-access memory (RAM), read-only memory (ROM), electrically erasable programmable read-only memory (EEPROM), flash memory or other memory technology. Any such non-transitory computer/processor storage media may be part of a device or accessible or connectable thereto. Computer/processor readable/executable instructions to implement an application or module described herein may be stored or otherwise held by such non-transitory computer/processor readable storage media.

In future networks, such as 6G, it is expected more UE requirements and more UE capabilities will be introduced, for example, an extreme power saving requirement, and UEs with and without artificial intelligence (AI). As a consequence, if the same design principle of 5G NR is followed for DCI, there will be a significant number of DCI formats/sizes in 6G, which will lead to a significant burden on the UEs in performing blind decoding. The introduction of new DCI formats is complicated by DCI size alignments and may not be forward compatible. In addition, the number of blind decodings for the UE to perform is increased with the number of active carriers. Therefore, it would be advantageous to be able to reduce the number of blind decodings that the UEs need to perform.

Aspects of the present disclosure provide methods and devices for providing HARQ feedback for two stages in a two stage DCI structure.

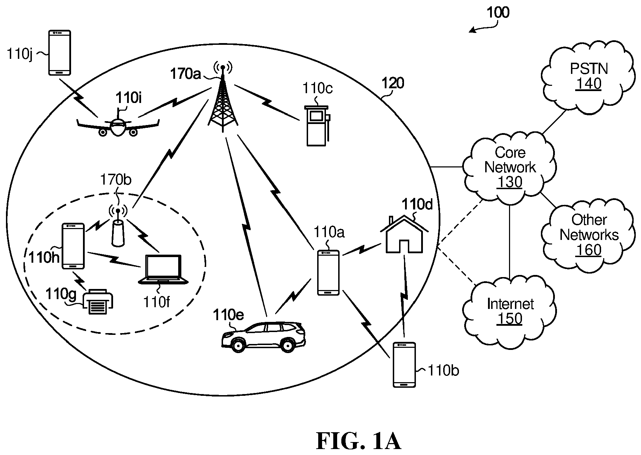

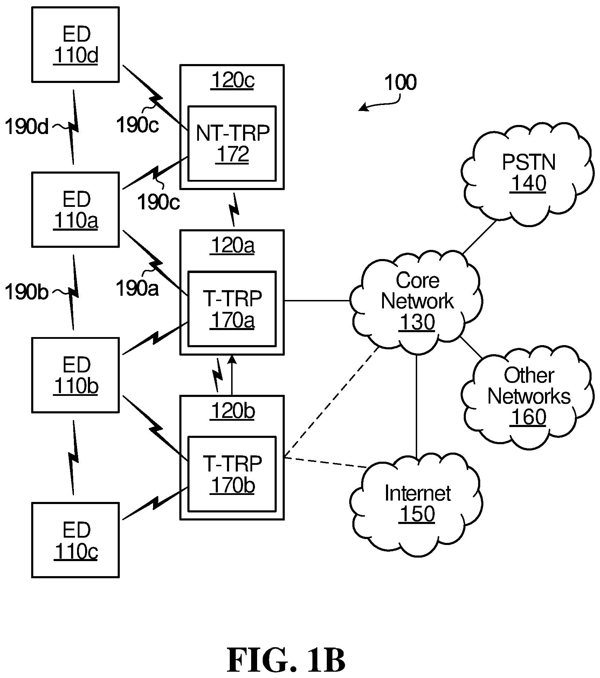

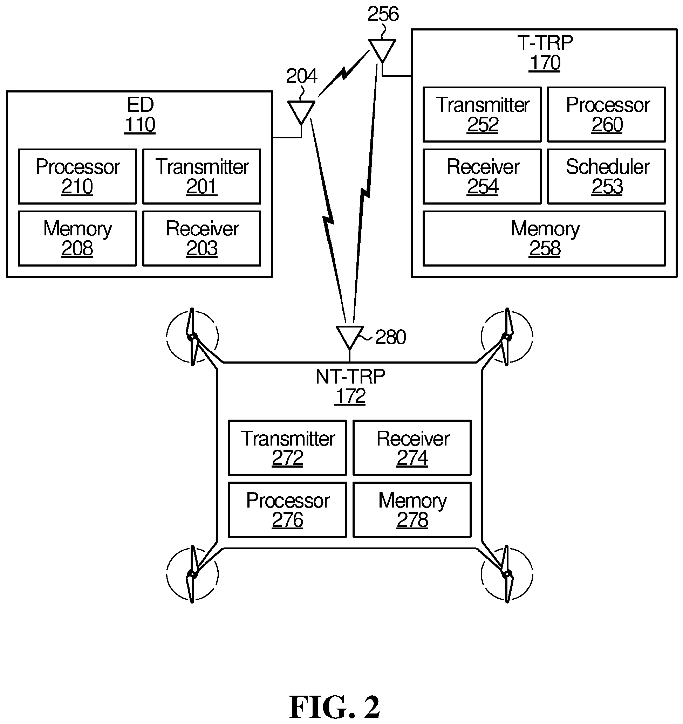

FIGs. 1A, 1B, and 2 following below provide context for the network and device that may be in the network and that may implement aspects of the present disclosure.

Referring to FIG. 1A, as an illustrative example without limitation, a simplified schematic illustration of a communication system is provided. The communication system 100 comprises a radio access network 120. The radio access network 120 may be a next generation (e.g. sixth generation (6G) or later) radio access network, or a legacy (e.g. 5G, 4G, 3G or 2G) radio access network. One or more communication electric device (ED) 110a-120j (generically referred to as 110) may be interconnected to one another, and may also or instead be connected to one or more network nodes (170a, 170b, generically referred to as 170) in the radio access network 120. A core network 130 may be a part of the communication system and may be dependent or independent of the radio access technology used in the communication system 100. Also the communication system 100 comprises a public switched telephone network (PSTN) 140, the internet 150, and other networks 160.

FIG. 1B illustrates an example communication system 100 in which embodiments of the present disclosure could be implemented. In general, the system 100 enables multiple wireless or wired elements to communicate data and other content. The purpose of the system 100 may be to provide content (voice, data, video, text) via broadcast, narrowcast, user device to user device, etc. The system 100 may operate efficiently by sharing resources such as bandwidth. The communication system 100 may operate by sharing resources, such as carrier spectrum bandwidth, between its constituent elements. The communication system 100 may include a terrestrial communication system and/or a non-terrestrial communication system. The communication system 100 may provide a wide range of communication services and applications (such as earth monitoring, remote sensing, passive sensing and positioning, navigation and tracking, autonomous delivery and mobility, etc.). The communication system 100 may provide a high degree of availability and robustness through a joint operation of the terrestrial communication system and the non-terrestrial communication system. For example, integrating a non-terrestrial communication system (or components thereof) into a terrestrial communication system can result in what may be considered a heterogeneous network comprising multiple layers. Compared to conventional communication networks, the heterogeneous network may achieve better overall performance through efficient multi-link joint operation, more flexible functionality sharing, and faster physical layer link switching between terrestrial networks and non-terrestrial networks.

The terrestrial communication system and the non-terrestrial communication system could be considered sub-systems of the communication system. In this example, the communication system 100 includes electronic devices (ED) 110a-110c, radio access networks (RANs) 120a-120b, a core network 130, a public switched telephone network (PSTN) 140, the Internet 150, and other networks 160. RANs 120a-120b include respective base stations (BSs) 170a-170b, which may be generically referred to as terrestrial transmit and receive points (T-TRPs) 170a-170b. The non-terrestrial communication network 120c includes an access node 120c, which may be generically referred to as a non-terrestrial transmit and receive point (NT-TRP) 172. While certain numbers of these components or elements are shown in FIG. 1B, any reasonable number of these components or elements may be included in the system 100.

The EDs 110a-110c are configured to operate, communicate, or both, in the system 100. For example, the EDs 110a-110c are configured to transmit, receive, or both via wireless communication channels. Each ED 110a-110c represents any suitable end user device for wireless operation and may include such devices (or may be referred to) as a user equipment/device (UE), wireless transmit/receive unit (WTRU), mobile station, mobile subscriber unit, cellular telephone, station (STA), machine type communication device (MTC), personal digital assistant (PDA), smartphone, laptop, computer, touchpad, wireless sensor, or consumer electronics device.

FIG. 1B illustrates an example communication system 100 in which embodiments of the present disclosure could be implemented. In general, the communication system 100 enables multiple wireless or wired elements to communicate data and other content. The purpose of the communication system 100 may be to provide content (voice, data, video, text) via broadcast, multicast, unicast, user device to user device, etc. The communication system 100 may operate by sharing resources such as bandwidth.

In this example, the communication system 100 includes electronic devices (ED) 110a-110c, radio access networks (RANs) 120a-120b, a core network 130, a public switched telephone network (PSTN) 140, the internet 150, and other networks 160. Although certain numbers of these components or elements are shown in FIG. 1B, any reasonable number of these components or elements may be included in the communication system 100.

The EDs 110a-110c are configured to operate, communicate, or both, in the communication system 100. For example, the EDs 110a-110c are configured to transmit, receive, or both, via wireless or wired communication channels. Each ED 110a-110c represents any suitable end user device for wireless operation and may include such devices (or may be referred to) as a user equipment/device (UE), wireless transmit/receive unit (WTRU), mobile station, fixed or mobile subscriber unit, cellular telephone, station (STA), machine type communication (MTC) device, personal digital assistant (PDA), smartphone, laptop, computer, tablet, wireless sensor, or consumer electronics device.

Any ED 110 may be alternatively or additionally configured to interface, access, or communicate with any other T-TRP 170a-170b and NT-TRP 172, the internet 150, the core network 130, the PSTN 140, the other networks 160, or any combination of the preceding. In some examples, ED 110a may communicate an uplink and/or downlink transmission over an interface 190a with T-TRP 170a. In some examples, the EDs 110a, 110b and 110d may also communicate directly with one another via one or more sidelink air interfaces 190b. In some examples, ED 110d may communicate an uplink and/or downlink transmission over an interface 190c with NT-TRP 172.

In FIG. 1B, the RANs 120a-120b include base stations 170a-170b, respectively. Each base station 170a-170b is configured to wirelessly interface with one or more of the EDs 110a-110c to enable access to any other base station 170a-170b, the core network 130, the PSTN 140, the internet 150, and/or the other networks 160. For example, the base stations 170a-170b may include (or be) one or more of several well-known devices, such as a base transceiver station (BTS), a Node-B (NodeB), an evolved NodeB (eNodeB), a Home eNodeB, a gNodeB, a transmission and receive point (TRP), a site controller, an access point (AP), or a wireless router.

In some examples, one or more of the base stations 170a-170b may be a terrestrial base station that is attached to the ground. For example, a terrestrial base station could be mounted on a building or tower. Alternatively, one or more of the base stations 170a-170b may be a non-terrestrial base station that is not attached to the ground. A flying base station is an example of the non-terrestrial base station. A flying base station may be implemented using communication equipment supported or carried by a flying device. Non-limiting examples of flying devices include airborne platforms (such as a blimp or an airship, for example), balloons, quadcopters and other aerial vehicles. In some implementations, a flying base station may be supported or carried by an unmanned aerial system (UAS) or an unmanned aerial vehicle (UAV), such as a drone or a quadcopter. A flying base station may be a moveable or mobile base station that can be flexibly deployed in different locations to meet network demand. A satellite base station is another example of a non-terrestrial base station. A satellite base station may be implemented using communication equipment supported or carried by a satellite. A satellite base station may also be referred to as an orbiting base station.

Any ED 110a-110c may be alternatively or additionally configured to interface, access, or communicate with any other base station 170a-170b, the internet 150, the core network 130, the PSTN 140, the other networks 160, or any combination of the preceding.

The EDs 110a-110c and base stations 170a-170b are examples of communication equipment that can be configured to implement some or all of the operations and/or embodiments described herein. In the embodiment shown in FIG. 1B, the base station 170a forms part of the RAN 120a, which may include other base stations, base station controller(s) (BSC), radio network controller(s) (RNC), relay nodes, elements, and/or devices. Any base station 170a, 170b may be a single element, as shown, or multiple elements, distributed in the corresponding RAN, or otherwise. Also, the base station 170b forms part of the RAN 120b, which may include other base stations, elements, and/or devices. Each base station 170a-170b transmits and/or receives wireless signals within a particular geographic region or area, sometimes referred to as a "cell" or "coverage area". A cell may be further divided into cell sectors, and a base station 170a-170b may, for example, employ multiple transceivers to provide service to multiple sectors. In some embodiments, there may be established pico or femto cells where the radio access technology supports such. In some embodiments, multiple transceivers could be used for each cell, for example using multiple-input multiple-output (MIMO) technology. The number of RAN 120a-120b shown is exemplary only. Any number of RAN may be contemplated when devising the communication system 100.

The base stations 170a-170b communicate with one or more of the EDs 110a-110c over one or more air interfaces 190 using wireless communication links e.g. radio frequency (RF), microwave, infrared (IR), etc. The air interfaces 190 may utilize any suitable radio access technology. For example, the communication system 100 may implement one or more orthogonal or non-orthogonal channel access methods, such as code division multiple access (CDMA), time division multiple access (TDMA), frequency division multiple access (FDMA), orthogonal FDMA (OFDMA), or single-carrier FDMA (SC-FDMA) in the air interfaces 190. The air interfaces 190a and 190b may utilize other higher dimension signal spaces, which may involve a combination of orthogonal and/or non-orthogonal dimensions.

A base station 170a-170b may implement Universal Mobile Telecommunication System (UMTS) Terrestrial Radio Access (UTRA) to establish an air interface 190 using wideband CDMA (WCDMA). In doing so, the base station 170a-170b may implement protocols such as High Speed Packet Access (HSPA), Evolved HPSA (HSPA+) optionally including High Speed Downlink Packet Access (HSDPA), High Speed Packet Uplink Access (HSPUA) or both. Alternatively, a base station 170a-170b may establish an air interface 190 with Evolved UTMS Terrestrial Radio Access (E-UTRA) using LTE, LTE-A, and/or LTE-B. It is contemplated that the communication system 100 may use multiple channel access operation, including such schemes as described above. Other radio technologies for implementing air interfaces include IEEE 802.11, 802.15, 802.16, CDMA2000, CDMA2000 1X, CDMA2000 EV-DO, IS-2000, IS-95, IS-856, GSM, EDGE, and GERAN. Of course, other multiple access schemes and wireless protocols may be utilized.

The RANs 120a-120b are in communication with the core network 130 to provide the EDs 110a-110c with various services such as voice, data, and other services. The RANs 120a-120b and/or the core network 130 may be in direct or indirect communication with one or more other RANs (not shown), which may or may not be directly served by core network 130, and may or may not employ the same radio access technology as RAN 120a, RAN 120b or both. The core network 130 may also serve as a gateway access between (i) the RANs 120a-120b or EDs 110a-110c or both, and (ii) other networks (such as the PSTN 140, the internet 150, and the other networks 160).

The EDs 110a-110c communicate with one another over one or more sidelink (SL) air interfaces 180 using wireless communication links e.g. radio frequency (RF), microwave, infrared (IR), etc. The SL air interfaces 180 may utilize any suitable radio access technology, and may be substantially similar to the air interfaces 190 over which the EDs 110a-110c communication with one or more of the base stations 170a-170c, or they may be substantially different. For example, the communication system 100 may implement one or more channel access methods, such as code division multiple access (CDMA), time division multiple access (TDMA), frequency division multiple access (FDMA), orthogonal FDMA (OFDMA), or single-carrier FDMA (SC-FDMA) in the SL air interfaces 180. In some embodiments, the SL air interfaces 180 may be, at least in part, implemented over unlicensed spectrum.

The air interface 190c can enable communication between the ED 110d and one or multiple NT-TRPs 172 via a wireless link or simply a link. For some examples, the link is a dedicated connection for unicast transmission, a connection for broadcast transmission, or a connection between a group of EDs and one or multiple NT-TRPs for multicast transmission.

In addition, some or all of the EDs 110a-110c may include operation for communicating with different wireless networks over different wireless links using different wireless technologies and/or protocols. Instead of wireless communication (or in addition thereto), the EDs may communicate via wired communication channels to a service provider or switch (not shown), and to the internet 150. PSTN 140 may include circuit switched telephone networks for providing plain old telephone service (POTS). Internet 150 may include a network of computers and subnets (intranets) or both, and incorporate protocols, such as internet protocol (IP), transmission control protocol (TCP) and user datagram protocol (UDP). EDs 110a-110c may be multimode devices capable of operation according to multiple radio access technologies, and incorporate multiple transceivers necessary to support multiple radio access technologies.

FIG. 2 illustrates another example of an ED 110 and network devices, including a base station 170a, 170b (at 170) and an NT-TRP 172. The ED 110 is used to connect persons, objects, machines, etc. The ED 110 may be widely used in various scenarios, for example, cellular communications, device-to-device (D2D), vehicle to everything (V2X), peer-to-peer (P2P), machine-to-machine (M2M), machine-type communications (MTC), internet of things (IOT), virtual reality (VR), augmented reality (AR), industrial control, self-driving, remote medical, smart grid, smart furniture, smart office, smart wearable, smart transportation, smart city, drones, robots, remote sensing, passive sensing, positioning, navigation and tracking, autonomous delivery and mobility, etc.

Each ED 110 represents any suitable end user device for wireless operation and may include such devices (or may be referred to) as a user equipment/device (UE), a wireless transmit/receive unit (WTRU), a mobile station, a fixed or mobile subscriber unit, a cellular telephone, a station (STA), a machine type communication (MTC) device, a personal digital assistant (PDA), a smartphone, a laptop, a computer, a tablet, a wireless sensor, a consumer electronics device, a smart book, a vehicle, a car, a truck, a bus, a train, or an IoT device, an industrial device, or apparatus (e.g. communication module, modem, or chip) in the forgoing devices, among other possibilities. Future generation EDs 110 may be referred to using other terms. The base station 170a and 170b is a T-TRP and will hereafter be referred to as T-TRP 170. Also shown in FIG. 2, a NT-TRP will hereafter be referred to as NT-TRP 172. Each ED 110 connected to T-TRP 170 and/or NT-TRP 172 can be dynamically or semi-statically turned-on (i.e., established, activated, or enabled), turned-off (i.e., released, deactivated, or disabled) and/or configured in response to one of more of: connection availability and connection necessity.

The ED 110 includes a transmitter 201 and a receiver 203 coupled to one or more antennas 204. Only one antenna 204 is illustrated. One, some, or all of the antennas may alternatively be panels. The transmitter 201 and the receiver 203 may be integrated, e.g. as a transceiver. The transceiver is configured to modulate data or other content for transmission by at least one antenna 204 or network interface controller (NIC). The transceiver is also configured to demodulate data or other content received by the at least one antenna 204. Each transceiver includes any suitable structure for generating signals for wireless or wired transmission and/or processing signals received wirelessly or by wire. Each antenna 204 includes any suitable structure for transmitting and/or receiving wireless or wired signals.

The ED 110 includes at least one memory 208. The memory 208 stores instructions and data used, generated, or collected by the ED 110. For example, the memory 208 could store software instructions or modules configured to implement some or all of the functionality and/or embodiments described herein and that are executed by the processing unit(s) 210. Each memory 208 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, on-processor cache, and the like.

The ED 110 may further include one or more input/output devices (not shown) or interfaces (such as a wired interface to the internet 150 in FIGs. 1A or 1B). The input/output devices permit interaction with a user or other devices in the network. Each input/output device includes any suitable structure for providing information to or receiving information from a user, such as a speaker, microphone, keypad, keyboard, display, or touch screen, including network interface communications.

The ED 110 further includes a processor 210 for performing operations including those related to preparing a transmission for uplink transmission to the NT-TRP 172 and/or T-TRP 170, those related to processing downlink transmissions received from the NT-TRP 172 and/or T-TRP 170, and those related to processing sidelink transmission to and from another ED 110. Processing operations related to preparing a transmission for uplink transmission may include operations such as encoding, modulating, transmit beamforming, and generating symbols for transmission. Processing operations related to processing downlink transmissions may include operations such as receive beamforming, demodulating and decoding received symbols. Depending upon the embodiment, a downlink transmission may be received by the receiver 203, possibly using receive beamforming, and the processor 210 may extract signaling from the downlink transmission (e.g. by detecting and/or decoding the signaling). An example of signaling may be a reference signal transmitted by NT-TRP 172 and/or T-TRP 170. In some embodiments, the processor 210 implements the transmit beamforming and/or receive beamforming based on the indication of beam direction, e.g. beam angle information (BAI), received from T-TRP 170. In some embodiments, the processor 210 may perform operations relating to network access (e.g. initial access) and/or downlink synchronization, such as operations relating to detecting a synchronization sequence, decoding and obtaining the system information, etc. In some embodiments, the processor 210 may perform channel estimation, e.g. using a reference signal received from the NT-TRP 172 and/or T-TRP 170.

Although not illustrated, the processor 210 may form part of the transmitter 201 and/or receiver 203. Although not illustrated, the memory 208 may form part of the processor 210.

The processor 210, and the processing components of the transmitter 201 and receiver 203 may each be implemented by the same or different one or more processors that are configured to execute instructions stored in a memory (e.g. in memory 208). Alternatively, some or all of the processor 210, and the processing components of the transmitter 201 and receiver 203 may be implemented using dedicated circuitry, such as a programmed field-programmable gate array (FPGA), a graphical processing unit (GPU), or an application-specific integrated circuit (ASIC).

The T-TRP 170 may be known by other names in some implementations, such as a base station, a base transceiver station (BTS), a radio base station, a network node, a network device, a device on the network side, a transmit/receive node, a Node B, an evolved NodeB (eNodeB or eNB), a Home eNodeB, a next Generation NodeB (gNB), a transmission point (TP), a site controller, an access point (AP), or a wireless router, a relay station, a remote radio head, a terrestrial node, a terrestrial network device, or a terrestrial base station, base band unit (BBU), remote radio unit (RRU), active antenna unit (AAU), remote radio head (RRH), central unit (CU), distributed unit (DU), positioning node, among other possibilities. The T-TRP 170 may be macro BSs, pico BSs, relay node, donor node, or the like, or combinations thereof. The T-TRP 170 may refer to the forging devices, or to apparatus (e.g. communication module, modem, or chip) in the forgoing devices. While the figures and accompanying description of example and embodiments of the disclosure generally use the terms AP, BS, and AP or BS, it is to be understood that such device could be any of the types described above.

In some embodiments, the parts of the T-TRP 170 may be distributed. For example, some of the modules of the T-TRP 170 may be located remote from the equipment housing the antennas of the T-TRP 170, and may be coupled to the equipment housing the antennas over a communication link (not shown) sometimes known as front haul, such as common public radio interface (CPRI). Therefore, in some embodiments, the term T-TRP 170 may also refer to modules on the network side that perform processing operations, such as determining the location of the ED 110, resource allocation (scheduling), message generation, and encoding/decoding, and that are not necessarily part of the equipment housing the antennas of the T-TRP 170. The modules may also be coupled to other T-TRPs. In some embodiments, the T-TRP 170 may actually be a plurality of T-TRPs that are operating together to serve the ED 110, e.g. through coordinated multipoint transmissions.

The T-TRP 170 includes at least one transmitter 252 and at least one receiver 254 coupled to one or more antennas 256. Only one antenna 256 is illustrated. One, some, or all of the antennas may alternatively be panels. The transmitter 252 and the receiver 254 may be integrated as a transceiver. The T-TRP 170 further includes a processor 260 for performing operations including those related to: preparing a transmission for downlink transmission to the ED 110, processing an uplink transmission received from the ED 110, preparing a transmission for backhaul transmission to NT-TRP 172, and processing a transmission received over backhaul from the NT-TRP 172. Processing operations related to preparing a transmission for downlink or backhaul transmission may include operations such as encoding, modulating, precoding (e.g. multiple-input multiple-output (MIMO) precoding), transmit beamforming, and generating symbols for transmission. Processing operations related to processing received transmissions in the uplink or over backhaul may include operations such as receive beamforming, and demodulating and decoding received symbols. The processor 260 may also perform operations relating to network access (e.g. initial access) and/or downlink synchronization, such as generating the content of synchronization signal blocks (SSBs), generating the system information, etc. In some embodiments, the processor 260 also generates the indication of beam direction, e.g. BAI, which may be scheduled for transmission by scheduler 253. The processor 260 performs other network-side processing operations described herein, such as determining the location of the ED 110, determining where to deploy NT-TRP 172, etc. In some embodiments, the processor 260 may generate signaling, e.g. to configure one or more parameters of the ED 110 and/or one or more parameters of the NT-TRP 172. Any signaling generated by the processor 260 is sent by the transmitter 252. Note that "signaling", as used herein, may alternatively be called control signaling. Dynamic signaling may be transmitted in a control channel, e.g. a physical downlink control channel (PDCCH), and static or semi-static higher layer signaling may be included in a packet transmitted in a data channel, e.g. in a physical downlink shared channel (PDSCH).

A scheduler 253 may be coupled to the processor 260. The scheduler 253 may be included within or operated separately from the T-TRP 170, which may schedule uplink, downlink, and/or backhaul transmissions, including issuing scheduling grants and/or configuring scheduling-free ("configured grant") resources. The T-TRP 170 further includes a memory 258 for storing information and data. The memory 258 stores instructions and data used, generated, or collected by the T-TRP 170. For example, the memory 258 could store software instructions or modules configured to implement some or all of the functionality and/or embodiments described herein and that are executed by the processor 260.

Although not illustrated, the processor 260 may form part of the transmitter 252 and/or receiver 254. Also, although not illustrated, the processor 260 may implement the scheduler 253. Although not illustrated, the memory 258 may form part of the processor 260.

The processor 260, the scheduler 253, and the processing components of the transmitter 252 and receiver 254 may each be implemented by the same or different one or more processors that are configured to execute instructions stored in a memory, e.g. in memory 258. Alternatively, some or all of the processor 260, the scheduler 253, and the processing components of the transmitter 252 and receiver 254 may be implemented using dedicated circuitry, such as a FPGA, a GPU, or an ASIC.

Although the NT-TRP 172 is illustrated as a drone only as an example, the NT-TRP 172 may be implemented in any suitable non-terrestrial form. Also, the NT-TRP 172 may be known by other names in some implementations, such as a non-terrestrial node, a non-terrestrial network device, or a non-terrestrial base station. The NT-TRP 172 includes a transmitter 272 and a receiver 274 coupled to one or more antennas 280. Only one antenna 280 is illustrated. One, some, or all of the antennas may alternatively be panels. The transmitter 272 and the receiver 274 may be integrated as a transceiver. The NT-TRP 172 further includes a processor 276 for performing operations including those related to: preparing a transmission for downlink transmission to the ED 110, processing an uplink transmission received from the ED 110, preparing a transmission for backhaul transmission to T-TRP 170, and processing a transmission received over backhaul from the T-TRP 170. Processing operations related to preparing a transmission for downlink or backhaul transmission may include operations such as encoding, modulating, precoding (e.g. MIMO precoding), transmit beamforming, and generating symbols for transmission. Processing operations related to processing received transmissions in the uplink or over backhaul may include operations such as receive beamforming, and demodulating and decoding received symbols. In some embodiments, the processor 276 implements the transmit beamforming and/or receive beamforming based on beam direction information (e.g. BAI) received from T-TRP 170. In some embodiments, the processor 276 may generate signaling, e.g. to configure one or more parameters of the ED 110. In some embodiments, the NT-TRP 172 implements physical layer processing, but does not implement higher layer functions such as functions at the medium access control (MAC) or radio link control (RLC) layer. As this is only an example, more generally, the NT-TRP 172 may implement higher layer functions in addition to physical layer processing.

The NT-TRP 172 further includes a memory 278 for storing information and data. Although not illustrated, the processor 276 may form part of the transmitter 272 and/or receiver 274. Although not illustrated, the memory 278 may form part of the processor 276.

The processor 276 and the processing components of the transmitter 272 and receiver 274 may each be implemented by the same or different one or more processors that are configured to execute instructions stored in a memory, e.g. in memory 278. Alternatively, some or all of the processor 276 and the processing components of the transmitter 272 and receiver 274 may be implemented using dedicated circuitry, such as a programmed FPGA, a GPU, or an ASIC. In some embodiments, the NT-TRP 172 may actually be a plurality of NT-TRPs that are operating together to serve the ED 110, e.g. through coordinated multipoint transmissions.

The T-TRP 170, the NT-TRP 172, and/or the ED 110 may include other components, but these have been omitted for the sake of clarity.

One or more steps of the embodiment methods provided herein may be performed by corresponding units or modules, according to FIG. 2. FIG. 2 illustrates units or modules in a device, such as in ED 110, in T-TRP 170, or in NT-TRP 172. For example, a signal may be transmitted by a transmitting unit or a transmitting module. A signal may be received by a receiving unit or a receiving module. A signal may be processed by a processing unit or a processing module. Other steps may be performed by an artificial intelligence (AI) or machine learning (ML) module. The respective units or modules may be implemented using hardware, one or more components or devices that execute software, or a combination thereof. For instance, one or more of the units or modules may be an integrated circuit, such as a programmed FPGA, a GPU, or an ASIC. It will be appreciated that where the modules are implemented using software for execution by a processor for example, they may be retrieved by a processor, in whole or part as needed, individually or together for processing, in single or multiple instances, and that the modules themselves may include instructions for further deployment and instantiation.

Additional details regarding the EDs 110, T-TRP 170, and NT-TRP 172 are known to those of skill in the art. As such, these details are omitted here.

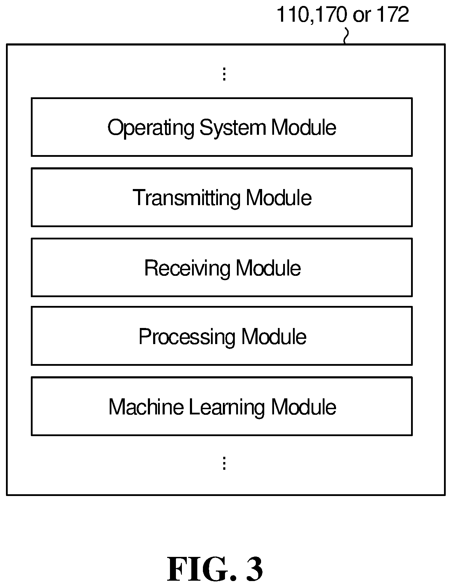

One or more steps of the embodiment methods provided herein may be performed by corresponding units or modules, according to FIG. 3. FIG. 3 illustrates units or modules in a device, such as in ED 110, in T-TRP 170, or in NT-TRP 172. For example, a signal may be transmitted by a transmitting unit or a transmitting module. A signal may be received by a receiving unit or a receiving module. A signal may be processed by a processing unit or a processing module. Other steps may be performed by an artificial intelligence (AI) or machine learning (ML) module. The respective units or modules may be implemented using hardware, one or more components or devices that execute software, or a combination thereof. For instance, one or more of the units or modules may be an integrated circuit, such as a programmed FPGA, a GPU, or an ASIC. It will be appreciated that where the modules are implemented using software for execution by a processor for example, they may be retrieved by a processor, in whole or part as needed, individually or together for processing, in single or multiple instances, and that the modules themselves may include instructions for further deployment and instantiation.

Additional details regarding the EDs 110, T-TRP 170, and NT-TRP 172 are known to those of skill in the art. As such, these details are omitted here.

For future wireless networks, a number of the new devices could increase exponentially with diverse functionalities. Also, many new applications and new use cases in future wireless networks than existing in 5G may emerge with more diverse quality of service demands. These will result in new key performance indications (KPIs) for the future wireless network (for an example, 6G network) that can be extremely challenging, so the sensing technologies, and AI technologies, especially ML (deep learning) technologies, had been introduced to telecommunication for improving the system performance and efficiency.

AI/ML technologies applied communication including AI/ML communication in Physical layer and AI/ML communication in media access control (MAC) layer. For physical layer, the AI/ML communication may be useful to optimize the components design and improve the algorithm performance, like AI/ML on channel coding, channel modelling, channel estimation, channel decoding, modulation, demodulation, MIMO, waveform, multiple access, PHY element parameter optimization and update, beam forming & tracking and sensing & positioning, etc. For MAC layer, AI/ML communication may utilize the AI/ML capability with learning, prediction and make decisions to solve the complicated optimization problems with better strategy and optimal solution, for example to optimize the functionality in MAC, e.g. intelligent TRP management, intelligent beam management, intelligent channel resource allocation, intelligent power control, intelligent spectrum utilization, intelligent MCS, intelligent hybrid automatic repeat request (HARQ) strategy, intelligent transmit/receive (Tx/Rx) mode adaption, etc.

AI/ML architectures usually involve multiple nodes, which can be organized in two modes, i.e., centralized and distributed, both of which can be deployed in access network, core network, or an edge computing system or third-party network. The centralized training and computing architecture are restricted by huge communication overhead and strict user data privacy. Distributed training and computing architecture comprise several frameworks, e.g., distributed machine learning and federated learning. AI/ML architectures comprises intelligent controller which can perform as single agent or multi-agent, based on joint optimization or individual optimization. New protocol and signaling mechanism is needed so that the corresponding interface link can be personalized with customized parameters to meet particular requirements while minimizing signaling overhead and maximizing the whole system spectrum efficiency by personalized AI technologies.

Further terrestrial and non-terrestrial networks can enable a new range of services and applications such as earth monitoring, remote sensing, passive sensing and positioning, navigation, and tracking, autonomous delivery and mobility. Terrestrial networks based sensing and non-terrestrial networks based sensing could provide intelligent context-aware networks to enhance the UE experience. For example, terrestrial networks based sensing and non-terrestrial networks based sensing may involve opportunities for localization and sensing applications based on a new set of features and service capabilities. Applications such as THz imaging and spectroscopy have the potential to provide continuous, real-time physiological information via dynamic, non-invasive, contactless measurements for future digital health technologies. Simultaneous localization and mapping (SLAM) methods will not only enable advanced cross reality (XR) applications but also enhance the navigation of autonomous objects such as vehicles and drones. Further in terrestrial and non-terrestrial networks, the measured channel data and sensing and positioning data can be obtained by the large bandwidth, new spectrum, dense network and more light-of-sight (LOS) links. Based on these data, a radio environmental map can be drawn through AI/ML methods, where channel information is linked to its corresponding positioning or environmental information to provide an enhanced physical layer design based on this map.

Sensing coordinators are nodes in a network that can assist in the sensing operation. These nodes can be standalone nodes dedicated to just sensing operations or other nodes (for example TRP 170, ED 110, or core network node) doing the sensing operations in parallel with communication transmissions. A new protocol and signaling mechanism is needed so that the corresponding interface link can be performed with customized parameters to meet particular requirements while minimizing signaling overhead and maximizing the whole system spectrum efficiency.

AI/ML and sensing methods are data-hungry. In order to involve AI/ML and sensing in wireless communications, more and more data are needed to be collected, stored, and exchanged. The characteristics of wireless data expand quite large ranges in multiple dimensions, e.g., from sub-6 GHz, millimeter to Terahertz carrier frequency, from space, outdoor to indoor scenario, and from text, voice to video. These data collecting, processing and usage operations are performed in a unified framework or a different framework.

### Cell/Carrier/Bandwidth Parts (BWPs)/Occupied Bandwidth

A device, such as a base station, may provide coverage over a cell. Wireless communication with the device may occur over one or more carrier frequencies. A carrier frequency will be referred to as a carrier. A carrier may alternatively be called a component carrier (CC). A carrier may be characterized by its bandwidth and a reference frequency, e.g. the center or lowest or highest frequency of the carrier. A carrier may be on licensed or unlicensed spectrum. Wireless communication with the device may also or instead occur over one or more bandwidth parts (BWPs). For example, a carrier may have one or more BWPs. More generally, wireless communication with the device may occur over spectrum. The spectrum may comprise one or more carriers and/or one or more BWPs.

A cell may include one or multiple downlink resources and optionally one or multiple uplink resources, or a cell may include one or multiple uplink resources and optionally one or multiple downlink resources, or a cell may include both one or multiple downlink resources and one or multiple uplink resources. As an example, a cell might only include one downlink carrier/BWP, or only include one uplink carrier/BWP, or include multiple downlink carriers/BWPs, or include multiple uplink carriers/BWPs, or include one downlink carrier/BWP and one uplink carrier/BWP, or include one downlink carrier/BWP and multiple uplink carriers/BWPs, or include multiple downlink carriers/BWPs and one uplink carrier/BWP, or include multiple downlink carriers/BWPs and multiple uplink carriers/BWPs. In some embodiments, a cell may instead or additionally include one or multiple sidelink resources, including sidelink transmitting and receiving resources.

A BWP is a set of contiguous or non-contiguous frequency subcarriers on a carrier, or a set of contiguous or non-contiguous frequency subcarriers on multiple carriers, or a set of non-contiguous or contiguous frequency subcarriers, which may have one or more carriers.

In some embodiments, a carrier may have one or more BWPs, e.g. a carrier may have a bandwidth of 20 MHz and consist of one BWP, or a carrier may have a bandwidth of 80 MHz and consist of two adjacent contiguous BWPs, etc. In other embodiments, a BWP may have one or more carriers, e.g. a BWP may have a bandwidth of 40 MHz and consists of two adjacent contiguous carriers, where each carrier has a bandwidth of 20 MHz. In some embodiments, a BWP may comprise non-contiguous spectrum resources which consists of non-contiguous multiple carriers, where the first carrier of the non-contiguous multiple carriers may be in mmW band, the second carrier may be in a low band (such as 2GHz band), the third carrier (if it exists) may be in THz band, and the fourth carrier (if it exists) may be in visible light band. Resources in one carrier which belong to the BWP may be contiguous or non-contiguous. In some embodiments, a BWP has non-contiguous spectrum resources on one carrier.

Wireless communication may occur over an occupied bandwidth. The occupied bandwidth may be defined as the width of a frequency band such that, below the lower and above the upper frequency limits, the mean powers emitted are each equal to a specified percentage β/2 of the total mean transmitted power, for example, the value of β/2 is taken as 0.5%.

The carrier, the BWP, or the occupied bandwidth may be signaled by a network device (e.g. base station) dynamically, e.g. in physical layer control signaling such as DCI, or semi-statically, e.g. in radio resource control (RRC) signaling or in the medium access control (MAC) layer, or be predefined based on the application scenario; or be determined by the UE as a function of other parameters that are known by the UE, or may be fixed, e.g. by a standard.

### Two-stage DCI framework

A DCI transports downlink control information for one or more cells/carriers/BWPs. A DCI may include one or more fields of information. DCI structure includes one stage DCI and two stage DCI. In one stage DCI structure, the DCI has a single part and is carried on a physical channel, e.g. PDCCH, a UE receives the physical channel and decodes the DCI in the physical channel, then receives or transmits data according to the control information in the DCI. For instance, in 3GPP TS 38.212v15.8.0, DCI formats 0_0, 0_1, 1_0, 1_1, 2_0, 2_1, 2_2 and 2_3 are one stage DCIs.

In a two stage DCI structure, the DCI structure includes two parts, i.e. first stage DCI and corresponding second stage DCI. The first stage DCI and the second stage DCI are transmitted in different physical channels, e.g. the first stage DCI is carried on a PDCCH and the second stage DCI is carried on a PDSCH, wherein the second stage DCI is not multiplexed with UE DL data, i.e. the second stage DCI is transmitted on a PDSCH without DL-SCH. The first stage DCI indicates control information for the second stage DCI, including time/frequency/spatial resources of the second stage DCI. Optionally, the first stage DCI can indicate the presence of the second stage DCI. If the second stage DCI is present, a UE needs to receive both the first stage and the second stage DCI to get the control information for data transmission. For the contents of the first stage DCI and second stage DCI, the first stage DCI includes the control information for the second stage DCI and the second stage DCI includes the control information for the UE data; or the first stage DCI includes the control information for the second stage DCI and partial control information for the UE data, and the second stage DCI includes partial or whole control information for the UE data. If the second stage DCI is not present, which may be indicated by the first stage DCI, a UE receives the first stage DCI to get the control information for data transmission.

In accordance with an embodiment of the application, a two stage DCI framework is provided. The two stage framework involves the use of a first stage DCI that is transmitted by the network device, for example by a base station, for reception by UE. The first stage DCI is carried by a physical downlink control channel (PDCCH). The two stage framework also involves the use of a second stage DCI that is transmitted by the network device for reception by UE. The second stage DCI is carried by a physical downlink shared channel (PDSCH) without data transmission, or the second stage DCI is carried in a specific physical channel (e.g. a specific downlink data channel, or a specific downlink control channel) only for the second stage DCI transmission.

The second stage DCI is transmitted on PDSCH without downlink shared channel (DL-SCH), where the DL-SCH is a transport channel used for the transmission of downlink data. That is to say the physical resources of the PDSCH used to transmit the second stage DCI are used for a transmission including the second stage DCI without multiplexing with other downlink data. For example, where the unit of transmission on the PDSCH is a physical resource block (PRB) in frequency-domain and a slot in time-domain, an entire resource block in a slot is available for second stage DCI transmission. This allows maximum flexibility in terms of the size of the second stage DCI, without the constraints on the amount of DCI that could be transmitted that would be introduced if multiplexing with downlink data was employed. This also avoids the complexity of rate matching for downlink data if the downlink data is multiplexed with DCI.

The UE receives the first stage DCI (for example by receiving a physical channel carrying the first stage DCI) and performs decoding (e.g. blind decoding) to decode the first stage DCI. Scheduling information for the second stage DCI, within the PDSCH, is explicitly indicated by the first stage DCI. The result is that the second stage DCI can be received and decoded by the UE without the need to perform blind decoding, based on the scheduling information in the first stage DCI.

As compared to scheduling a PDSCH carrying downlink data, in some embodiments more robust scheduling information is used to schedule a PDSCH carrying second stage DCI, increasing the likelihood of that the receiving UE can successfully decode the second stage DCI. Detailed examples are provided below.

Because the second stage DCI is not limited by constraints that may exist for PDCCH transmissions, the size of the second stage DCI is very flexible, and may be used to indicate scheduling information for one carrier, multiple carriers, multi-transmissions for one carrier. Detailed examples are provided below.

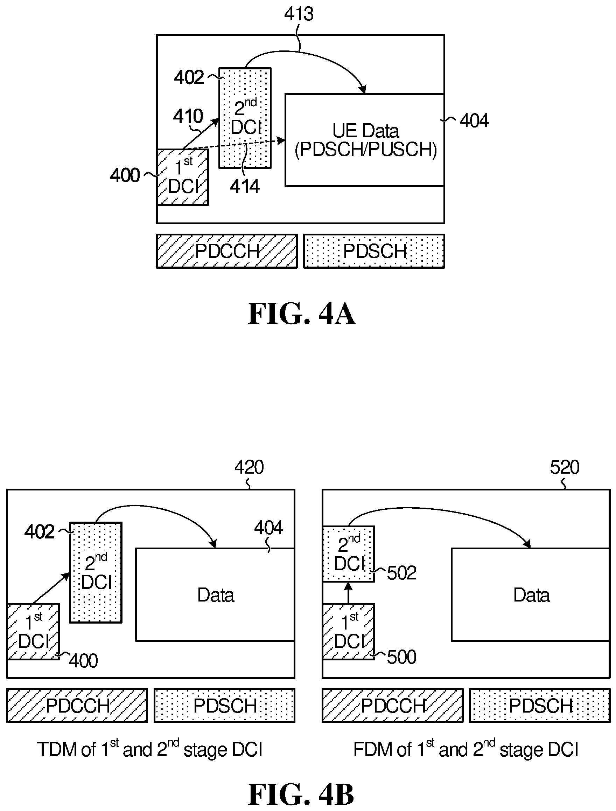

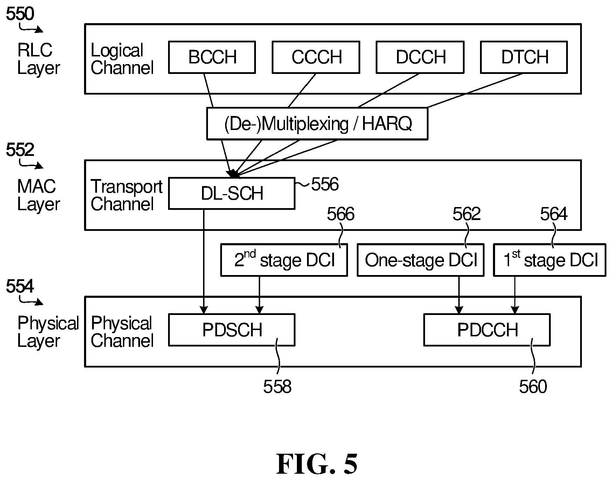

An example of the resources that might be used for the two stage DCI is shown in FIG. 4A. In FIG. 4A, time domain (e.g, orthogonal frequency division multiplexing (OFDM) symbol durations) is in the horizontal axis, and frequency domain (e.g, OFDM subcarriers) is in the vertical direction. Shown is a first stage DCI 400 transmitted using a PDCCH, where the PDCCH includes one or more control channel elements (CCEs) or enhanced CCEs, and a second stage DCI 402 transmitted on a PDSCH using at least one of one or more PRBs, one or multiple transport block(s), and one or more symbols, the PDSCH uses for transmitting the second stage DCI 402 only without any UE data transmission. One example of PDCCH and PDSCH structure can refer to the following FIG. 5. The first stage DCI 400 includes a scheduling information of the second stage DCI 402, depicted graphically by arrow 410. Also shown is UE data 404, which may include uplink data on a physical uplink shared channel (PUSCH) and/or downlink data on a PDSCH and/or a sidelink channel scheduled by the second stage DCI.

In some embodiments, scheduling information of the second stage DCI indicates parameters of at least one of a time resource, a frequency resource and a spatial resource of the second stage DCI. The first stage DCI may also indicate at least modulation order of the second stage DCI, coding rate of the second stage DCI, partial or full scheduling information for a data transmission.

The second stage DCI may include scheduling information for data channel, e.g. PDSCH for DL scheduling and/or PUSCH for uplink (UL) scheduling. Referring to FIG. 4A, for this case, arrow 410 represents the indication of the time and/or frequency and/or spatial resources and/or modulation order and/or coding rate of the second stage DCI, and arrow 413 represents the scheduling information for data transmission, e.g. DL scheduling for PDSCH and/or UL scheduling for PUSCH and/or sidelink resources for UE transmission or reception

In some embodiments, the first stage DCI indicates scheduling information of the second stage DCI, and also includes partial scheduling information for a data transmission, such as one or more of time/frequency/spatial resource allocation, modulation order, coding rate, HARQ information, UE feedback resources, or power control for data. The second stage DCI includes additional detailed scheduling information for data, e.g. the information not indicated by first stage DCI, or an update to the information indicated by first stage DCI for data. Referring to FIG. 4A, for this case, arrow 410 represents the indication of the time and/or frequency and/or spatial resources and/or modulation order and/or coding rate of the second stage DCI. Arrow 414 represents partial scheduling information for data transmission. Arrow 413 represents the detailed scheduling information for data, e.g. DL scheduling for PDSCH and/or UL scheduling for PUSCH.

The first stage DCI is blind decoded by the UE. No blind decoding is required for the second stage DCI because the scheduling information of the second stage DCI is explicitly indicated by the first stage DCI.

A transport block defines the basic information bits unit transmitted in PDSCH/PUSCH. For PDSCH carrying downlink data, e.g. information bits from MAC layer, a MAC protocol data unit (PDU) is mapped to a TB. For PDSCH carrying the second stage DCI, the DCI is mapped to a TB. The transport block size (TBS) is defined as the size (number of bits) of a TB. Depending on definition, the TB size may include or exclude the CRC bits. While no TB from a medium access control (MAC) layer is transmitted in the PDSCH carrying the second stage DCI, the size of the second stage DCI may be determined in a manner similar to how TB size for DL-SCH transmitted using the PDSCH is calculated/determined. The TB size may be calculated, for example, based on the available resource elements (REs) for PDSCH, modulation order, coding rate, the number of layers, etc. See for example, Section 5.1.3.2 of 3GPP TS 38.214 which includes a detailed breakdown of an example method of TB size calculation. Therefore, by assigning flexible RBs and symbols for the PDSCH, and using various coding rates for the DCI, the size of second stage DCI is very flexible, enabling DCI size to be specified differently for different uses, for example, different UEs, different services, different scenarios, etc., thus can achieve personalized DCI size requirements.

In some embodiments, the second stage DCI may indicate at least one of the following for scheduling data transmission for a UE:
scheduling information for one PDSCH in one carrier/BWP;
scheduling information for multiple PDSCH in one carrier/BWP;
scheduling information for one PUSCH in one carrier/BWP;
scheduling information for multiple PUSCH in one carrier/BWP;
scheduling information for one PDSCH and one PUSCH in one carrier/BWP;
scheduling information for one PDSCH and multiple PUSCH in one carrier/BWP;
scheduling information for multiple PDSCH and one PUSCH in one carrier/BWP;
scheduling information for multiple PDSCH and multiple PDSCH in one carrier/BWP;
scheduling information for sidelink in one carrier/BWP;
partial scheduling information for at least one PUSCH and/or at least one PDSCH in one carrier/BWP, wherein the partial scheduling information is an update to scheduling information in the first stage DCI;
partial scheduling information for at least one PUSCH and/or at least one PDSCH, wherein remaining scheduling information for the at least one PUSCH and/or at least one PDSCH is included in the first stage DCI;
configuration information related to an artificial intelligence (AI)/machine learning (ML) function;
configuration information related to a non-AI/ML function;

Therefore, the two-stage DCI mechanism can be used to achieve a unified design for UEs with different AI/ML capabilities. The design is unified in the sense that the same DCI format for the first stage DCI can be used, while the scheduling information in the second stage DCI is flexible, and can be used to configure AI/ML functions. For example, for scheduling information included scheduling information in second stage DCI, which may include one or more of frequency/time domain resource allocation, modulation order, coding scheme, new data indicator, redundancy version, HARQ related information, transmit power control, PUCCH resource indicator, antenna port(s), transmission configuration indication, code block group indicator, pre-emption indication, cancellation indication, availability indicator, resource pool index, etc. (others could refer to Section 7.3.1 DCI formats in 3GPP TS 38.212-g20), the second stage DCI can include a dynamic indication whether the information is for a non-AI mode or an AI mode. When the AI mode has multiple AI types, the second stage DCI can include a dynamic indication indicating one of the multiple AI type. When an AI mode applies, the value in the scheduling information field is used as an input to an AI inference engine to determine the meaning.

For the time and frequency resources of first stage DCI and second stage DCI, they can be time division multiplexed and/or frequency division multiplexed, however in general, the first stage DCI will need to be decoded before the second stage DCI is decoded, as the UE is not aware of the second stage DCI until the first stage DCI is decoded. FIG. 4A shows a first example, generally indicated at 420 (which shows the same resource usage as FIG. 4A), where first and second stage DCIs 400,402 are time division multiplexed. In some embodiments, where the frequency resource is the same for the first and second stage DCIs, the scheduling information of the second stage DCI contained in the first stage DCI does not include information about a frequency resource.

FIG. 4B shows a second example, generally indicated at 520, where first and second stage DCIs 500,502 are frequency division multiplexed. In this example, the first and second stage DCIs 500,502 are received at the same time or in overlapping frequency resources, the first stage DCI 500 is decoded first, since the UE is not aware of the second stage DCI until having decoded the first stage DCI. In some embodiments, where the time resource is the same for the first and second stage DCIs, the scheduling information of the second stage DCI contained in the first stage DCI does not include information about a time resource.

For all of the embodiments described herein, it is assumed that the first stage DCI is carried by a PDCCH and the second stage DCI is carried by a PDSCH. PDCCH is the physical channel that carries control information. PDSCH is the physical channel that carries DL-SCH originating from a higher layer and/or control information. The PDCCH transmission of the first stage DCI may include of one or more control-channel elements (CCEs), or enhanced CCEs. The PDSCH transmission of the second stage DCI may occupy at least one of one or more PRBs in the frequency-domain, one or more TBs and one or more symbols in the time-domain. The processing procedure is similar to the downlink data processing.

Referring now to FIG. 5, shown is an example of a protocol stack that includes RLC (radio link control) layer 550, MAC layer 552 and physical layer 554. RLC operates per logical channel, MAC operates per transport channel (e.g. downlink-shared channel (DL-SCH)) and physical layer operates per physical channel (e.g. PDSCH, PDCCH).

PDSCH 558 is the physical channel that carries the DL-SCH originating from a higher layer, i.e. there is a particular transport channel is mapped to PDSCH. For example, DL-SCH 556 is shown mapped to PDSCH 558.

PDCCH 560 is the physical channel that carries control information, e.g. DCI, and PDCCH has no corresponding transport channel. With the provided methods, one stage DCI 562 and first stage DCI 564 are carried by PDCCH 560, second stage DCI 566 is carried by PDSCH 558, but as noted above there is no multiplexing between the DCI and the downlink data on PDSCH 558. While the PDSCH is generally used to transmit transport blocks including downlink data from a DL-SCH, when a transport block transmitted on the PDSCH is carrying the second stage DCI, the PDSCH does not carry DL-SCH.

A method of two stage DCI transmission by a network element includes transmitting, by the network element, a first stage DCI in a physical downlink control channel (PDCCH), the first stage DCI explicitly indicating a scheduling information of a second stage DCI. The method also includes transmitting, by the network element, the second stage DCI in a first physical downlink shared channel (PDSCH), wherein the first PDSCH is a physical channel without data transmission. The first stage DCI is blind decoded by the UE. No blind decoding is required for the second stage DCI because the scheduling information of the second stage DCI is explicitly indicated by the first stage DCI.

Another method includes receiving, by the apparatus, a first stage DCI in a physical downlink control channel (PDCCH). The method continues with decoding, by the apparatus, the first stage DCI in physical downlink control channel (PDCCH), the first stage DCI explicitly indicating a scheduling information of a second stage DCI. The method continues with receiving, by the apparatus, the second stage DCI in a first physical downlink shared channel (PDSCH), wherein the first PDSCH is a physical channel without data transmission. The method also includes decoding, by the apparatus, the second stage DCI in the first PDSCH. The first stage DCI is blind decoded by the UE. No blind decoding is required for the second stage DCI because the scheduling information of the second stage DCI is explicitly indicated by the first stage DCI.

The first stage DCI and the second stage DCI can be transmitted in TDM or FDM which disclosed in the above embodiments of FIG. 4A and FIG. 4B. In some embodiments, scheduling information of the second stage DCI indicates parameters of at least one of a time resource, a frequency resource and a spatial resource of the second stage DCI. The first stage DCI may also indicate at least modulation order of the second stage DCI, coding rate of the second stage DCI, partial or full scheduling information for a data transmission. The second stage DCI may include scheduling information for data channel, e.g. PDSCH for DL scheduling and/or PUSCH for uplink (UL) scheduling, for an example, the indication of the time and/or frequency and/or spatial resources and/or modulation order and/or coding rate of the second stage DCI. For another example, the scheduling information for data transmission, e.g. DL scheduling for PDSCH and/or UL scheduling for PUSCH and/or sidelink resources for UE transmission or reception. In some embodiments, the first stage DCI indicates scheduling information of the second stage DCI, and also includes partial scheduling information for a data transmission, such as one or more of time/frequency/spatial resource allocation, modulation order, coding rate, HARQ information, UE feedback resources, or power control for data. The second stage DCI includes additional detailed scheduling information for data, e.g. the information not indicated by first stage DCI, or an update to the information indicated by first stage DCI for data. In some embodiments, the second stage DCI may indicate at least one of the following for scheduling data transmission for a UE: scheduling information for one PDSCH in one carrier/BWP; scheduling information for multiple PDSCH in one carrier/BWP; scheduling information for one PUSCH in one carrier/BWP; scheduling information for multiple PUSCH in one carrier/BWP; scheduling information for one PDSCH and one PUSCH in one carrier/BWP; scheduling information for one PDSCH and multiple PUSCH in one carrier/BWP; scheduling information for multiple PDSCH and one PUSCH in one carrier/BWP; scheduling information for multiple PDSCH and multiple PDSCH in one carrier/BWP; scheduling information for sidelink in one carrier/BWP; partial scheduling information for at least one PUSCH and/or at least one PDSCH in one carrier/BWP, wherein the partial scheduling information is an update to scheduling information in the first stage DCI; partial scheduling information for at least one PUSCH and/or at least one PDSCH, wherein remaining scheduling information for the at least one PUSCH and/or at least one PDSCH is included in the first stage DCI; configuration information related to an artificial intelligence (AI)/machine learning (ML) function; configuration information related to a non-AI/ML function.

In Long Term Evolution (LTE) and New Radio (NR) telecommunication protocols, for DCI indicating a Semi-Persistent Scheduling (SPS) release, feedback includes a single HARQ-ACK bit. For other DCIs, there may be no HARQ-ACK feedback. For PDSCH that carry UE data, HARQ-ACK feedback may be supported.

For HARQ-ACK in LTE and NR, the SPS release DCI and PDSCH share a same HARQ configuration and PUCCH resources for transmitting the HARQ communication. For example, the SPS release DCI and PDSCH share the same radio resource control (RRC) configured sets for PDSCH-to-HARQ-timing (i.e. an offset between a reference slot and a UL slot where acknowledgement feedback is scheduled for the scheduled PDSCH and that is identified as a K1 value in 3GPP NR) and PUCCH resources. A HARQ-ACK codebook may include information for the UE to perform joint feedback of PDSCH and SPS release.

As a result of what is described above, the UE uses a SPS release DCI as a specific PDSCH in the HARQ-ACK procedure.

However, embodiments of the present disclosure enable HARQ-ACK feedback from the UE that may be used to provide reliability for the 2^{nd} stage DCI of the two stage DCI structure. In some embodiments, HARQ-ACK and retransmission schemes are provided for the 2^{nd} stage DCI.

If the 2^{nd} stage DCI is not received at the UE, or is received but cannot be decoded, the UE may need to buffer received data in the whole BWP because the UE does not know the time-frequency locations of scheduled PDSCH or PUSCH. To avoid having to buffer large amounts of received data, it would be beneficial to use a fast feedback process that enables feedback to be provided quick enough that a retransmission can be scheduled.

Another issue that may arise is that even when the 2nd stage DCI is retransmitted, the HARQ timing and PUCCH resource indication that was included in the initial 2nd stage DCI may be inappropriate for a newly scheduled 2nd stage DCI and the PDSCH scheduled in the retransmitted 2nd stage DCI.

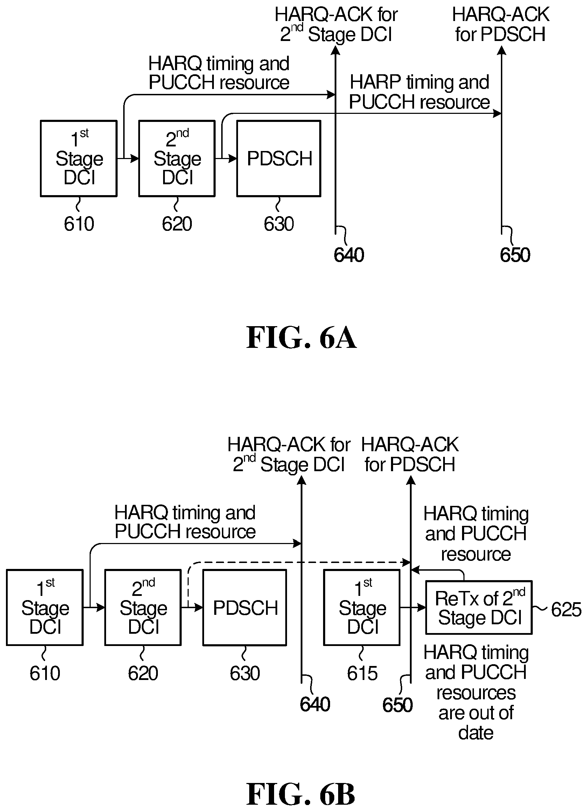

FIG. 6A illustrates an example of a two stage DCI transmission between a transmitter, such as a base station and a receiver, such as a UE, with scheduled HARQ-ACK for the 2^{nd} stage DCI and HARQ-ACK for the PDSCH scheduled by the 2^{nd} stage DCI. A 1^{st} stage DCI 610, 2^{nd} stage DCI 620 and PDSCH 630, each considered to be occupying a time-frequency resource, are shown in a sequential order of increasing time from left to right. The 1^{st} stage DCI 610 transmitted by the base station includes scheduling information for the 2^{nd} stage DCI 620 and an identification of a HARQ timing and PUCCH resource to be used for the 2^{nd} stage DCI 620. The location of the PUCCH resource is indicated by reference character 640. The 2^{nd} stage DCI 620 includes scheduling information for the PDSCH 630 and an identification of a HARQ timing and PUCCH resource to be used for the PDSCH 630. The location of the PUCCH resource is indicated by reference character 650. When the UE receives and is able to successfully decode the 2^{nd} stage DCI 620, the UE sends a HARQ-ACK at the scheduled PUCCH 640.

FIG. 6B illustrates an example of a two stage DCI transmission with scheduled HARQ-ACK for the 2^{nd} stage DCI and HARQ-ACK for the PDSCH, but the 2^{nd} stage DCI 620 is not successfully received and/or decoded by the UE. Therefore, the UE sends a HARQ negative acknowledgement (NACK) at PUCCH resource 640. As a result of receiving the HARQ NACK, the base station transmits a new 1^{st} stage DCI 615 that includes scheduling for retransmitting a new 2^{nd} stage DCI 625. When the UE successfully receives the retransmitted 2^{nd} stage DCI 625 (ReTx of 2^{nd} Stage DCI), and decodes the HARQ-ACK timing for the scheduled PDSCH in the retransmitted 2^{nd} stage DCI 625, the HARQ timing and PUCCH resource 640 may be out of date and the UE cannot send HARQ-ACK feedback for the scheduled PDSCH when it was originally scheduled. For example, as seen in FIG. 6B, the re-transmission of the 2^{nd} stage DCI 625 occurs after the location of the PUCCH resource 650 that was included with the original 2^{nd} stage DCI 620, so the PUCCH resource 650 is already past after the re-transmission of the 2^{nd} stage DCI and out of date.

Some embodiments provide methods for HARQ-ACK feedback and retransmission schemes for the 2^{nd} stage DCI that enable fast feedback for 2^{nd} stage DCI HARQ-ACK. In some embodiments, a first HARQ-ACK is used for the 2^{nd} stage DCI and a second HARQ-ACK is used for other PDSCH scheduled by the 2^{nd} stage DCI. In some embodiments, separate sets of PDSCH-to-HARQ-timing (K1) information and PUCCH resources are used for 2^{nd} stage DCI and for the other PDSCH scheduled by the 2^{nd} stage DCI, as will be described in further detail below.

Some embodiments provide methods for HARQ-ACK feedback and retransmission schemes for the 2^{nd} stage DCI that enable re-transmission of 2^{nd} stage DCI. In some embodiments, dedicated fields may be used in the 1^{st} stage DCI for update information for data PDSCH HARQ timing when the 2^{nd} stage DCI is retransmitted.

The following paragraphs describe the use of separate HARQ configurations and feedback for 2^{nd} stage DCI and for the PDSCH scheduled by the 2^{nd} stage DCI. Examples will also be used to describe embodiments in which a higher priority is assigned for 2^{nd} stage DCI HARQ-ACK feedback than for PDSCH HARQ-ACK and how this affects what feedback information the UE sends to the base station.

In some embodiments, for 2^{nd} stage DCI HARQ-ACK, the UE may generate a 1 bit HARQ-ACK codebook. The codebook only contains the HARQ information for the 2^{nd} stage DCI. There is no joint codebook that includes HARQ information for the 2^{nd} stage DCI and the HARQ information for PDSCH. There are separate HARQ-ACK codebooks for 2^{nd} stage DCI HARQ-ACK and for the PDSCH HARQ-ACK.

In some embodiments, the base station configures a separate dedicated PUCCH resource for the HARQ-ACK feedback for the 2^{nd} stage DCI. This may take the form of a short PUCCH resource for fast feedback that may provide a higher reliability. The base station may configure other dedicated PUCCH resources for HARQ-ACK feedback for the PDSCH scheduled by the 2^{nd} stage DCI.

In some embodiments, the base station configures HARQ timing sets for the 2^{nd} stage DCI and for the PDSCH separately. A HARQ timing set contains one or multiple candidate HARQ timing value. Each HARQ timing value may be a K1 value, where K1 is an offset between a reference slot and an uplink (UL) slot where the ACK/NACK feedback is for the scheduled 2^{nd} stage DCI or an offset between a reference slot and an UL slot where the ACK/NACK feedback is for the scheduled PDSCH. In some embodiments, the reference slot with reference to the 1^{st} stage DCI may be a downlink (DL) slot where the 2^{nd} stage DCI is scheduled. In some embodiments, the reference slot with reference to the PDSCH may be a DL slot where the data is scheduled on the PDSCH

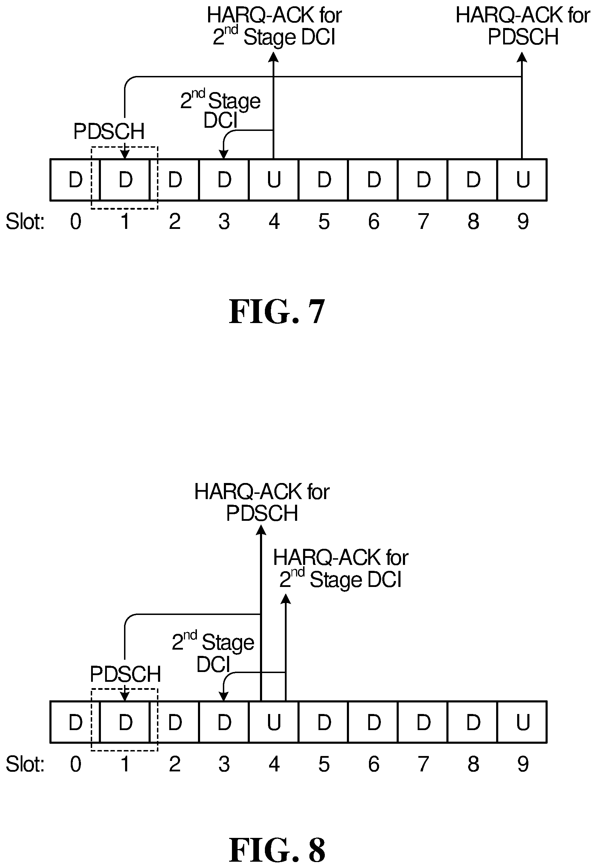

FIG. 7 illustrates a series of transmission resource slots labeled from 0 to 9, in which slots 0 to 3 and 5 to 8 are resources for DL transmission (D) and slots 4 and 9 are resources for UL transmission (U). For the HARQ timing, the base station configures a set of possible K1 values, K1_1 = {0,1,2}, for the 2^{nd} stage DCI, and another set of K1 values, K1_2 = {3,7,8}, for the PDSCH. The K1_1 set identifies that the HARQ ACK information for the 2^{nd} stage DCI may be transmitted in an UL slot that is 0, 1 or 2 slots from where the 2^{nd} stage DCI is transmitted. The K1_2 set identifies that the HARQ ACK information for the PDSCH may be transmitted in an DL slot that is 3, 7 or 8 slots from where the PDSCH is transmitted.

For the PUCCH resources, the base station configures a first set of PUCCH resource values {short PUCCH 1, short PUCCH2} for the HARQ-ACK feedback of the 2^{nd} stage DCI and a second set of PUCCH resource values {long PUCCH 1, long PUCCH2, long PUCCH 3, short PUCCH 1} for the HARQ-ACK feedback of the PDSCH. The first set of PUCCH resource values identify that the PUCCH resource for HARQ-ACK feedback of the 2^{nd} stage DCI may be any one of a first short PUCCH and a second short PUCCH. The second set of PUCCH resource values identify that the PUCCH resource for the PDSCH may be any one of a first long PUCCH, second long PUCCH, a third long PUCCH, or a short PUCCH.

The values indicated above for the K1_1 set, the K1_2 set, the first set of PUCCH resource values and the second set of PUCCH resource values are purely by way of example, and the individual values, the number of values per set and types of resource PUCCHs may be selected based on the implementation.

The 1^{st} stage DCI indicates the HARQ timing and PUCCH resource for the HARQ-ACK feedback of the 2^{nd} stage DCI. The 2^{nd} stage DCI indicates the HARQ timing and PUCCH resource for the scheduled PDSCH.

In FIG. 7, at slot 1, the base station transmits a PDSCH to the UE, and indicates the K1 value is the 3^{rd} value of the K1_2 set and the PUCCH resource value is the 1^{st} value of the second PUCCH resource set. The UE chooses the 3^{rd} value from K1_2 identified above, i.e. K1=8, and the 1^{st} value from the second PUCCH resource set identified above, i.e. long PUCCH 1. Therefore, at slot n=1+K1=9, the UE sends the HARQ-ACK feedback for the PDSCH using the long PUCCH 1. At slot 3, the base station sends a 2^{nd} stage DCI. In the 1^{st} stage DCI that includes scheduling for the 2^{nd} stage DCI, the base station indicates the HARQ timing K1 is the 2^{nd} value of the K1_1 set and the PUCCH resource is the 1^{st} value of first PUCCH resource set. The UE chooses the 2^{nd} value from K1_1 set, i.e. K1=1, and the 1^{st} value from the second PUCCH resource set, i.e. short PUCCH 1. Therefore, at slot n=3+K1=4, the UE sends the HARQ-ACK feedback for the 2^{nd} stage DCI using short PUCCH 1.

In some embodiments, in one UL slot, the UE may be configured to use two PUCCH, in which a first PUCCH is for the 2^{nd} stage DCI and a second PUCCH is for the PDSCH scheduled by the 2^{nd} stage DCI. In some embodiments, transmission of the PUCCH for the 2^{nd} stage DCI may be given a higher priority than transmission of the PUCCH for the PDSCH. The information regarding the 2^{nd} stage DCI may warrant a higher priority because the 2^{nd} stage DCI includes scheduling for a subsequent PDSCH, and as described above the scheduling for the PDSCH may be outdated if the 2^{nd} stage DCI is not received or decoded properly.

FIG. 8 illustrates another 10 slot resource in which the slots are labeled from 0 to 9. In this particular example, PDSCH transmission occurs in slot 1 and the base station indicates that the UE should report HARQ-ACK for the PDSCH transmission at slot 4. The 2^{nd} stage DCI transmission occurs in slot 3 and the base station indicates the UE should report HARQ-ACK for the 2^{nd} stage DCI at slot 4. If symbols of the PUCCH resource of HARQ-ACK feedback for the 2^{nd} stage DCI and for PDSCH are non-overlapping in time domain, the UE may send both PUCCH at slot 4. However, if symbols of the two PUCCH resources overlap in time domain, PUCCH for the 2nd stage DCI may be granted a higher priority, and as a result, the UE will transmit the PUCCH for the 2nd stage DCI and will not transmit the PUCCH for PDSCH HARQ-ACK.

The values indicated above for the K1_1 set, the K1_2 set, the first set of PUCCH resource values and the second set of PUCCH resource values applied to the 10 slot resources in FIGs. 7 and 8 are purely by way of example, and the individual values, the number of values per set and types of resource PUCCHs may be selected based on the implementation.

In some embodiments, when the 1^{st} stage DCI schedules a retransmission of the 2^{nd} stage DCI as a result of a NACK received, or a ACK not being received because the 1^{st} stage DCI was not received or decoded, the 1^{st} stage DCI may include updated HARQ timing and PUCCH resource information for the PDSCH scheduled by the 2^{nd} stage DCI.

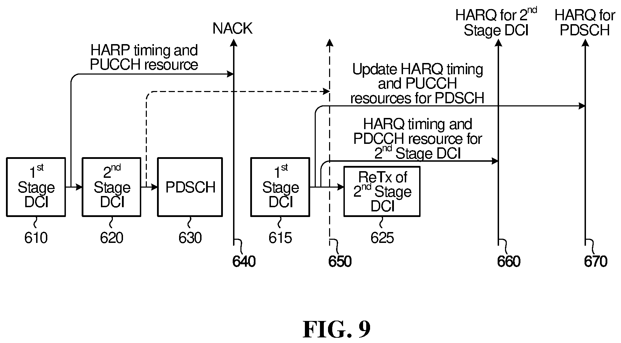

When the base station sends a 1^{st} stage DCI that includes scheduling information for a retransmission of the 2^{nd} stage DCI, a new data indicator (NDI) field may be toggled to indicate that the 2^{nd} stage DCI being scheduled is a retransmission allowing the UE to identify the 2^{nd} stage DCI as a retransmission. In some embodiments, the 1^{st} stage DCI scheduling the 2^{nd} stage DCI includes HARQ timing and PUCCH resources for HARQ feedback of scheduled 2^{nd} DCI and, in addition, updated HARQ timing and PUCCH resources for the PDSCH that was scheduled by a previous transmission of the 2^{nd} DCI that was not received or decoded properly to enable the scheduling information for the 2^{nd} stage DCI to be determined. FIG. 9 illustrates a two stage DCI transmission scenario in which the 2^{nd} stage DCI is not received or decoded properly and therefore the UE sends a NACK in a similar manner to FIG. 6B. As the HARQ ACK for the PDSCH 650 as scheduled by the 2^{nd} stage DCI 620 is out of date because the 2^{nd} state DCI 625 is retransmitted, the 1^{st} stage DCI 615 includes HARQ timing 660 and PUCCH resource for the retransmitted 2^{nd} stage DCI 625 and includes updated HARQ timing 670 and PUCCH resource for the PDSCH (not shown) scheduled by the retransmitted 2^{nd} stage DCI 625. In some embodiments, a reference slot for the PDSCH-to-HARQ-timing (K1) is updated in the 1^{st} stage DCI for PDSCH if the slot in which the 2^{nd} DCI is retransmitted or if the 1^{st} stage DCI schedules the retransmission of the 2^{nd} stage DCI.

Indicating the updated HARQ timing and PUCCH resource information for the PDSCH scheduled by the 2^{nd} stage DCI can be performed in several different ways.

In some embodiments, dedicated fields may be included in the 1^{st} stage DCI that contain the update information. For example, the 1^{st} stage DCI may include fields for the 2^{nd} stage DCI, which indicate HARQ feedback timing and the PUCCH resource. The 1^{st} stage DCI may also include fields for the PDSCH that is scheduled by the 2^{nd} stage DCI, which indicate HARQ feedback timing if the 2^{nd} stage DCI is the first transmission or indicate update timing information for the PDSCH if the 2^{nd} stage DCI is a retransmission. Similarly, the 1^{st} stage DCI may also include fields for the PDSCH that is scheduled by the 2^{nd} stage DCI, which indicate a PUCCH resource if the 2^{nd} stage DCI is the first transmission or indicate the update PUCCH resource for the PDSCH if the 2^{nd} stage DCI is a retransmission.

In some embodiments, other fields in the 1^{st} stage DCI may be used to include the update info. The base station may have access to two sets of information, a first set is a set of values for HARQ timing for the 2^{nd} DCI and a second set is a set of pairs of values in which a first value of the pair is timing for the 2^{nd} DCI and a second value of the pair is timing for PDSCH. The sets of information may be stored at the base station for use when needed or generated at the base station as needed. In some embodiments, the set of information may be provided to the UE by the base station, or a network that the base station is a part of, by RRC signaling. When the UE is provided with information defining the sets, it may be possible to provide the UE an index value associated with the set when a value from the set is selected by the base station for use by the UE.

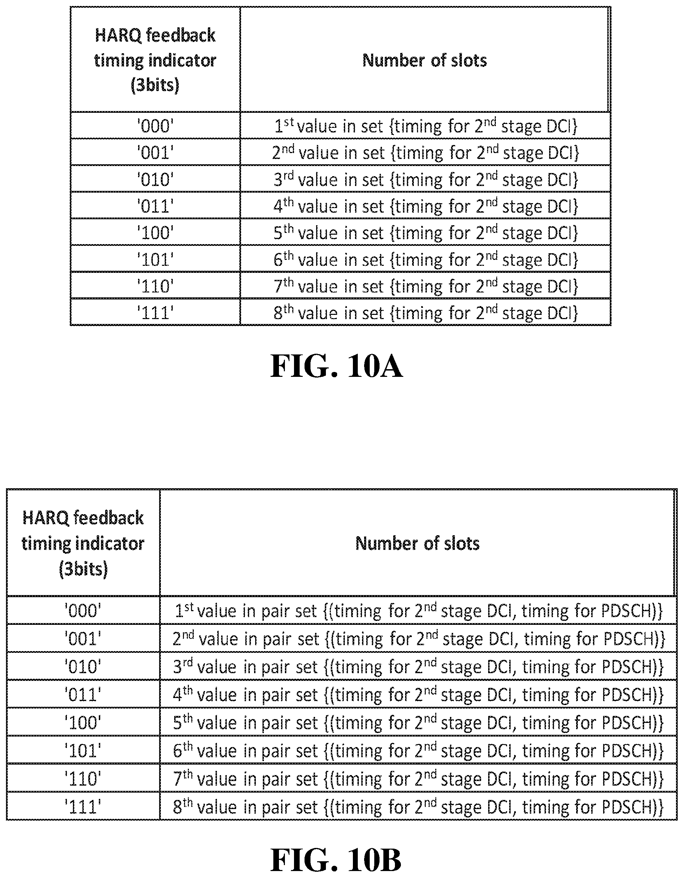

In some embodiments, the 1^{st} stage DCI includes a PDSCH-to-HARQ feedback timing indicator. When the 1^{st} stage DCI indicates that the scheduling information is for the initial transmission of the 2^{nd} stage DCI (possibly with the use of an NDI field), the 1^{st} stage DCI may select a HARQ feedback timing indication using a value from a first set of HARQ timing values. FIG 10A is an example of a look up table for a first set of values in which each value in the first set is a three bit value. Therefore, there are eight possible HARQ feedback timing indication values.

When the 1^{st} stage DCI indicates that the scheduling information is for the retransmission of the 2^{nd} stage DCI, the 1^{st} stage DCI may select a HARQ feedback timing indication using a value from a second set as described above. FIG. 10B is an example of a look up table for a second set of values in which each value in the second set is a three bit value. Therefore, there are eight possible HARQ feedback timing indication values, where each value corresponds to a particular value for the timing for the 2^{nd} stage DCI and a particular value for the timing of the PDSCH.

FIGs. 10A and 10B include HARQ feedback timing values that are three bits in lengths for a total of eight possible values. This is merely an example, and it is to be understood that the number of bits identifying individual HARQ feedback timing values depend in the total number of HARQ feedback timing vales in a set.

While FIGs. 10A and 10B illustrate look-up tables that identify HARQ feedback timing, there are other ways that the HARQ feedback timing could be maintained and individual elements of a set be selected.

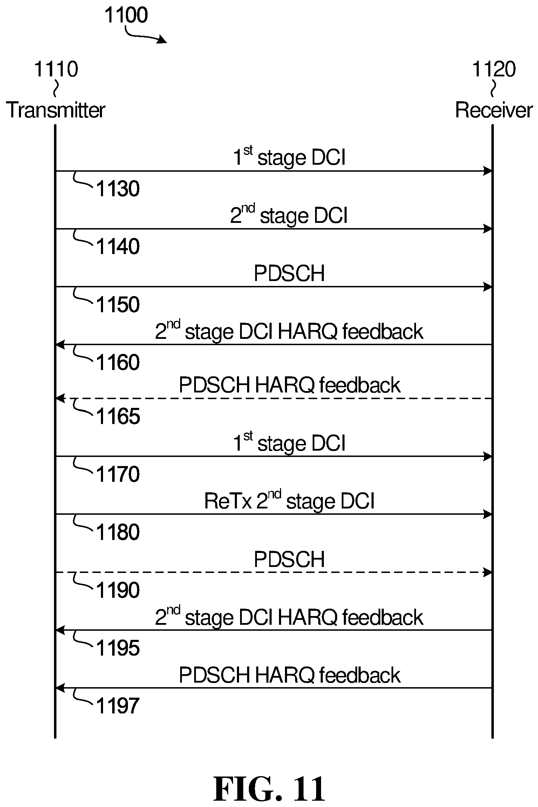

FIG. 11 is a signal flow diagram 1100 illustrating communication between a transmitter 1110 and a receiver 1120 using a two stage DCI method according to aspects of the present disclosure. In the particular example of FIG. 11, the transmitter 1110 is a base station and the receiver 1120 is a UE. At 1130, the transmitter 1110 transmits a 1^{st} stage DCI to the receiver 1120. For an initial transmission, the 1^{st} stage DCI includes scheduling information for a transmission of the 2^{nd} stage DCI, a new data indicator (NDI) field that indicates whether the 2^{nd} stage DCI being scheduled is an initial transmission or a retransmission, and HARQ feedback timing and PUCCH resource for the 2^{nd} stage DCI. At 1140, the transmitter 1110 transmits a 2^{nd} stage DCI to the receiver 1120 that was scheduled based on information in the 1^{st} stage DCI at 1130. The 2^{nd} stage DCI includes scheduling information for a transmission of PDSCH as well as HARQ feedback timing and PUCCH resource for the scheduled PDSCH. At 1150, the transmitter 1110 transmits a PDSCH to the receiver 1120 that was scheduled by the 2^{nd} stage DCI at 1140. The PDSCH includes data scheduled by the 2^{nd} stage DCI. At 1160, the receiver 1120 transmits HARQ feedback to the transmitter 1110 indicating whether the 2^{nd} stage DCI was received or not.

If the UE 1120 sends an ACK at 1160 that the 2^{nd} DCI was received, then the receiver 1120 has received the necessary information to determine where the PDSCH is transmitted and can attempt to receive and decode the PDSCH transmitted at 1140. The receiver 1120 can send at 1165 (indicated as an optional step by a dashed line) HARQ feedback to the transmitter 1110 indicating whether the PDSCH was received or not. If the UE 1120 sends an ACK at 1165 that the 2^{nd} DCI was received, then the receiver 1120 has received and successfully decode the PDSCH. In such a case the base station 1110 can proceed to send a new 1^{st} stage DCI, a new 2^{nd} stage DCI, and a new PDSCH in the same manner as steps 1130, 1140, 1150 and 1160. If the UE 1120 sends a NACK at 1165 that the PDSCH was not received or successfully decoded, then the base station 1110 can proceed to send a retransmission of the PDSCH in an appropriate manner.

If the UE 1120 sends a NACK at 1160 that the 2^{nd} DCI was not received, then the base station 1110 can proceed to send a retransmission of the 2^{nd} stage DCI. Steps 1170, 1180, 1190, 1195 and 1197 described below include steps that occur when the receiver send s a NACK and the base station sends a retransmission of the 2^{nd} stage DCI.

When the NACK is received 1160 at the base station 1110, the base station 1110 sends 1170 a 1st stage DCI, which includes the NDI that indicates that the 1^{st} stage DCI is sending a retransmission of the 2^{nd} stage DCI. In addition to new scheduling information for the 2^{nd} stage DCI, the 1^{st} stage DCI also includes fields for the PDSCH that is scheduled by the 2^{nd} stage DCI, which indicate updated HARQ timing and PUCCH resources for the PDSCH that was scheduled by the previous transmission of the 2^{nd} DCI. The 1^{st} stage DCI also includes HARQ feedback timing and PUCCH resource for the retransmission of the 2^{nd} stage DCI. At 1180, the transmitter 1110 transmits a 2^{nd} stage DCI to the receiver 1120 that was scheduled by the 1^{st} stage DCI at 1170. The retransmission of the 2^{nd} stage DCI includes scheduling information for a transmission of PDSCH as well as HARQ feedback timing and PUCCH resource for the scheduled PDSCH, that is the same as the original transmission. At 1190, the transmitter 1110 may optionally (as indicated by dashed line) re-transmit a PDSCH to the receiver 1120 that was scheduled by the retransmission of the 2^{nd} stage DCI at 1180. Alternatively, the receiver 1120 may have temporarily stored the PDSCH sent by the transmitter at 1150, if the PDSCH was successfully received and decoded.

At 1195, the receiver 1120 transmits HARQ feedback to the transmitter 1110 indicating whether the retransmission of the 2^{nd} stage DCI was received or not.

If the UE 1120 sends an ACK that the 2^{nd} DCI was received, then the base station can proceed to send a new 1^{st} stage DCI, a new 2^{nd} stage DC, and a new PDSCH in the same manner as steps 1130, 1140, 1150 and 1160. If the UE 1120 sends an NACK that the 2^{nd} DCI was not received, the base station can proceed to send a further retransmission of the 2^{nd} stage DCI.

At 1197, if the retransmission of the 2^{nd} stage DCI is received and decoded successfully, and the PDSCH scheduled by the 2^{nd} stage DCI is received and decoded successfully, the UE sends an ACK for the PDSCH, Alternatively, the UE may send a NACK id the PDSCH was not received and/or decoded successfully.

In some embodiments, similar sets of values may be used for PUCCH resources.

In some embodiments the available value(s) of scheduling parameters for scheduling a PDSCH carrying second stage DCI are different from the corresponding values for scheduling a PDSCH carrying downlink data. The available sets of values may be separately predefined or separately configured by the base station.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. The respective units/modules may be hardware, software, or a combination thereof. For instance, one or more of the units/modules may be an integrated circuit, such as field programmable gate arrays (FPGAs) or application-specific integrated circuits (ASICs). It will be appreciated that where the modules are software, they may be retrieved by a processor, in whole or part as needed, individually or together for processing, in single or multiple instances as required, and that the modules themselves may include instructions for further deployment and instantiation.

Although a combination of features is shown in the illustrated embodiments, not all of them need to be combined to realize the benefits of various embodiments of this disclosure. In other words, a system or method designed according to an embodiment of this disclosure will not necessarily include all of the features shown in any one of the figures or all of the portions schematically shown in the figures. Moreover, selected features of one example embodiment may be combined with selected features of other example embodiments.

While this disclosure has been described with reference to illustrative embodiments, this description is not intended to be construed in a limiting sense. Various modifications and combinations of the illustrative embodiments, as well as other embodiments of the disclosure, will be apparent to persons skilled in the art upon reference to the description. The scope of the invention is therefore solely defined by the appended claims.

## Claims

1. A method for use in receiving two stage downlink, DL, control information, DCI, comprising:
receiving, by a user equipment, UE, (1120), in a physical downlink control channel, PDCCH, a first stage DCI of the two stage DCI, the first stage DCI comprising:
scheduling information for a second stage DCI of the two stage DCI, wherein the scheduling information identifies a first physical downlink shared channel, PDSCH, that is a physical channel without data transmission; and
an indication as to whether the scheduling information for the second stage DCI is for scheduling an initial transmission (1140) or a retransmission (1180) of the second stage DCI; **characterized in that**
when the scheduling information is for scheduling an initial transmission (1140) of the second stage DCI, receiving, by the UE (1120), in the first stage DCI (1130), hybrid automatic repeat request, HARQ, configuration information for HARQ feedback for the initial transmission (1140) of the second stage DCI; and
when the scheduling information is for scheduling a retransmission (1180) of the second stage DCI, receiving, by the UE (1120), in the first stage DCI (1170), HARQ configuration information for HARQ feedback for the retransmission (1180) of the second stage DCI and HARQ configuration information for HARQ feedback for a second PDSCH comprising data transmission scheduled by the retransmission (1180) of the second stage DCI.

2. The method of claim 1, wherein the HARQ configuration information is:
when the scheduling information is for the initial transmission, selected from a set of values, the set of values comprising values of HARQ feedback timing for the second stage DCI; or
when the scheduling information is for the retransmission, selected from a set of pairs of values, the set of pairs of values comprising pairs of values of HARQ feedback timing for the retransmission of the second stage DCI and HARQ timing for the second PDSCH.

3. The method of claims 1 or 2, wherein the HARQ configuration information is:
when the scheduling information is for the initial transmission, selected from a set of values, the set of values comprising values of physical uplink control channel, PUCCH, resource information for sending the HARQ feedback for the second stage DCI; or
when the scheduling information is for the retransmission, selected from a set of pairs of \values, the set of pairs of values comprising pairs of values of PUCCH resource information for the retransmission of the second stage DCI and for the PUCCH resource information for the second PDSCH.

4. The method of claims 2 or 3, wherein the HARQ feedback timing indicator is a value indicating an offset between a reference slot and an UL slot where an acknowledgement, ACK, feedback or negative acknowledgement, NACK, feedback is scheduled for the data transmission.

5. The method of claim 4, wherein when the scheduling information is for scheduling a retransmission (1180) of the second stage DCI, the reference slot is a DL slot where the data transmission is scheduled on the second PDSCH.

6. The method of any one of claims 1 to 5, wherein:
if a PUCCH resource of the HARQ feedback for the second stage DCI and the HARQ feedback for the second PDSCH are non-overlapping in time domain, transmitting, by the UE, HARQ feedback on two PUCCH; and
if the PUCCH resource of the HARQ feedback for the second stage DCI and the HARQ feedback for the second PDSCH overlap in the time domain, transmitting HARQ feedback on the PUCCH for second stage DCI and not transmitting the HARQ feedback for the second PDSCH.

7. A method for use in transmitting two stage downlink, DL, control information, DCI, comprising:
transmitting, by a base station (1110), in a physical downlink control channel, PDCCH, a first stage DCI of the two stage DCI, the first stage DCI comprising:
scheduling information for a second stage DCI of the two stage DCI, wherein the scheduling information identifies a first physical downlink shared channel, PDSCH, that is a physical channel without data transmission; and
an indication as to whether the scheduling information for the second stage DCI is for scheduling an initial transmission (1140) or a retransmission (1180) of the second stage DCI; **characterized in that**
when the scheduling information is for scheduling an initial transmission (1140) of the second stage DCI, transmitting, by the base station (1110), in the first stage DCI (1130), hybrid automatic repeat request, HARQ, configuration information for HARQ feedback for an initial transmission (1140) of the second stage DCI; and
when the scheduling information is for scheduling a retransmission (1180) of the second stage DCI, transmitting, by the base station (1110), in the first stage DCI (1170), HARQ configuration information for HARQ feedback for a retransmission (1180) of the second stage DCI and HARQ configuration information for HARQ feedback for a second PDSCH comprising data transmission scheduled by the retransmission (1180) of the second stage DCI.

8. The method of claim 7, wherein the HARQ configuration information is:
when the scheduling information is for the initial transmission, selected from a set of values, the set of values comprising values of HARQ feedback timing for the second stage DCI; or
when the scheduling information is for the retransmission, selected from a set of pairs of values, the set of pairs of values comprising pairs of values of HARQ feedback timing for the retransmission of the second stage DCI and HARQ timing for the second PDSCH.

9. The method of claim 7 or 8, wherein the HARQ configuration information is:
when the scheduling information is for the initial transmission, selected from a set of values, the set of values comprising values of physical uplink control channel, PUCCH, resource information for sending the HARQ feedback for the second stage DCI; or
when the scheduling information is for the retransmission, selected from a set of pairs of values, the set of pairs of values comprising pairs of values of PUCCH resource information for the retransmission of the HARQ feedback for the second stage DCI and for the PUCCH resource information for the second PDSCH.

10. The method of claims 8 or 9, wherein the HARQ feedback timing indicator is a value indicating an offset between a reference slot and an UL slot where an acknowledgement, ACK, feedback or negative acknowledgement, NACK, feedback is scheduled for the data transmission.

11. The method of claim 10, wherein when the scheduling information is for scheduling a retransmission (1180) of the second stage DCI, the reference slot is a DL slot where the data transmission is scheduled on the second PDSCH.

12. The method of any one of claims 7 to 11, wherein:
if a PUCCH resource of the HARQ feedback for the second stage DCI and the HARQ feedback for the second PDSCH are non-overlapping in time domain, receiving, by the base station, HARQ feedback on two PUCCH; and
if the PUCCH resource of the HARQ feedback for the second stage DCI and HARQ feedback for the second PDSCH overlap in the time domain, receiving, by the base station, HARQ feedback on the PUCCH for second stage DCI.

13. A device comprising:
a processor; and
a computer-readable medium having stored thereon, computer executable instructions, that when executed cause the processor to perform the method of any one of claims 1 to 12.

14. A communication system comprising a device of claim 13 when referring back to any one of claim 1 to 6, and a device of claim 13 when referring back to any one of claim 7 to 12.

15. A computer-readable medium storing computer executable instructions, when executed by a processor, cause the processor to perform the method of any one of claims 1 to 12.

## Patentansprüche

1. Verfahren zur Verwendung beim Empfangen von zweistufigen Downlink-Steuerungsinformationen, DL-Steuerungsinformationen, DCI, umfassend:
Empfangen einer DCI der ersten Stufe der zweistufigen DCI durch ein Benutzergerät, UE, (1120) in einem physischen Downlink-Steuerungskanal, PDCCH, wobei die DCI der ersten Stufe Folgendes umfasst:
Planungsinformationen für eine DCI der zweiten Stufe der zweistufigen DCI, wobei die Planungsinformationen einen ersten gemeinsamen physischen Downlink-Kanal, PDSCH, identifizieren, der ein physischer Kanal ohne Datenübertragung ist; und
eine Angabe, ob die Planungsinformationen für die DCI der zweiten Stufe zur Planung einer Erstübertragung (1140) oder einer Neuübertragung (1180) der DCI der zweiten Stufe dienen; **dadurch gekennzeichnet, dass**
wenn die Planungsinformationen zum Planen einer Erstübertragung (1140) der DCI der zweiten Stufe dienen, Empfangen von Konfigurationsinformationen hybrider automatischer Wiederholungsanfragen, HARQ-Konfigurationsinformationen, durch das UE (1120) in der DCI (1130) der ersten Stufe zum HARQ-Feedback für die Erstübertragung (1140) der DCI der zweiten Stufe; und
wenn die Planungsinformationen zum Planen einer Neuübertragung (1180) der DCI der zweiten Stufe dienen, Empfangen von HARQ-Konfigurationsinformationen durch das UE (1120) in der DCI (1170) der ersten Stufe zum HARQ-Feedback für die Neuübertragung (1180) der DCI der zweiten Stufe und von HARQ-Konfigurationsinformationen zum HARQ-Feedback für einen zweiten PDSCH, umfassend eine Datenübertragung, die durch die Neuübertragung (1180) der DCI der zweiten Stufe geplant wird.

2. Verfahren nach Anspruch 1, wobei die HARQ-Konfigurationsinformationen Folgendes sind:
wenn die Planungsinformationen für die Erstübertragung dienen, aus einem Satz von Werten ausgewählt, wobei der Satz von Werten Werte der HARQ-Feedback-Zeitsteuerung für die DCI der zweiten Stufe umfasst; oder
wenn die Planungsinformationen für die Neuübertragung dienen, aus einem Satz von Wertepaaren ausgewählt, wobei der Satz von Wertepaaren Wertepaare der HARQ-Feedback-Zeitsteuerung für die Neuübertragung der DCI der zweiten Stufe und eine HARQ-Zeitsteuerung für den zweiten PDSCH umfasst.

3. Verfahren nach Anspruch 1 oder 2, wobei die HARQ-Konfigurationsinformationen Folgendes sind:
wenn die Planungsinformationen für die Erstübertragung dienen, aus einem Satz von Werten ausgewählt, wobei der Satz von Werten Werte von Ressourceninformationen des physischen Uplink-Steuerungskanals, PUCCH-Ressourceninformationen, zum Senden des HARQ-Feedbacks für die DCI der zweiten Stufe umfasst; oder
wenn die Planungsinformationen für die Neuübertragung dienen, aus einem Satz von Wertepaaren ausgewählt, wobei der Satz von Wertepaaren Wertepaare von PUCCH-Ressourceninformationen für die Neuübertragung der DCI der zweiten Stufe und für die PUCCH-Ressourceninformationen für den zweiten PDSCH umfasst.

4. Verfahren nach Anspruch 2 oder 3, wobei der Indikator der HARQ-Feedback-Zeitsteuerung ein Wert ist, der einen Versatz zwischen einem Referenzschlitz und einem UL-Schlitz angibt, in dem ein Bestätigungsfeedback, ACK-Feedback, oder ein negatives Bestätigungsfeedback, NACK-Feedback, für die Datenübertragung geplant ist.

5. Verfahren nach Anspruch 4, wobei, wenn die Planungsinformationen zum Planen einer Neuübertragung (1180) der DCI der zweiten Stufe dienen, der Referenzschlitz ein DL-Schlitz ist, in dem die Datenübertragung auf dem zweiten PDSCH geplant ist.

6. Verfahren nach einem der Ansprüche 1 bis 5, wobei:
wenn sich eine PUCCH-Ressource des HARQ-Feedbacks für die DCI der zweiten Stufe und das HARQ-Feedback für den zweiten PDSCH im Zeitbereich nicht überlappen, Übertragen eines HARQ-Feedbacks durch das UE auf zwei PUCCH; und
wenn sich die PUCCH-Ressource des HARQ-Feedbacks für die DCI der zweiten Stufe und das HARQ-Feedback für den zweiten PDSCH in dem Zeitbereich überlappen, Übertragen eines HARQ-Feedbacks auf dem PUCCH für eine DCI der zweiten Stufe und nicht Übertragen des HARQ-Feedbacks für den zweiten PDSCH.

7. Verfahren zur Verwendung beim Übertragen von zweistufigen Downlink-Steuerungsinformationen, DL-Steuerungsinformationen, DCI, umfassend:
Übertragen einer DCI der ersten Stufe der zweistufigen DCI durch eine Basisstation (1110) in einem physischen Downlink-Steuerungskanal, PDCCH, wobei die DCI der ersten Stufe Folgendes umfasst:
Planungsinformationen für eine DCI der zweiten Stufe der zweistufigen DCI, wobei die Planungsinformationen einen ersten gemeinsamen physischen Downlink-Kanal, PDSCH, identifizieren, der ein physischer Kanal ohne Datenübertragung ist; und
eine Angabe, ob die Planungsinformationen für die DCI der zweiten Stufe zur Planung einer Erstübertragung (1140) oder einer Neuübertragung (1180) der DCI der zweiten Stufe dienen;
**dadurch gekennzeichnet, dass**
wenn die Planungsinformationen zum Planen einer Erstübertragung (1140) der DCI der zweiten Stufe dienen, Übertragen von Konfigurationsinformationen hybrider automatischer Wiederholungsanfragen, HARQ-Konfigurationsinformationen, durch die Basisstation (1110) in der DCI (1130) der ersten Stufe zum HARQ-Feedback für eine Erstübertragung (1140) der DCI der zweiten Stufe; und
wenn die Planungsinformationen zum Planen einer Neuübertragung (1180) der DCI der zweiten Stufe dienen, Übertragen von HARQ-Konfigurationsinformationen durch die Basisstation (1110) in der DCI (1170) der ersten Stufe zum HARQ-Feedback für eine Neuübertragung (1180) der DCI der zweiten Stufe und von HARQ-Konfigurationsinformationen zum HARQ-Feedback für einen zweiten PDSCH, umfassend eine Datenübertragung, die durch die Neuübertragung (1180) der DCI der zweiten Stufe geplant wird.

8. Verfahren nach Anspruch 7, wobei die HARQ-Konfigurationsinformationen Folgendes sind:
wenn die Planungsinformationen für die Erstübertragung dienen, aus einem Satz von Werten ausgewählt, wobei der Satz von Werten Werte der HARQ-Feedback-Zeitsteuerung für die DCI der zweiten Stufe umfasst; oder
wenn die Planungsinformationen für die Neuübertragung dienen, aus einem Satz von Wertepaaren ausgewählt, wobei der Satz von Wertepaaren Wertepaare der HARQ-Feedback-Zeitsteuerung für die Neuübertragung der DCI der zweiten Stufe und eine HARQ-Zeitsteuerung für den zweiten PDSCH umfasst.

9. Verfahren nach Anspruch 7 oder 8, wobei die HARQ-Konfigurationsinformationen Folgendes sind:
wenn die Planungsinformationen für die Erstübertragung dienen, aus einem Satz von Werten ausgewählt, wobei der Satz von Werten Werte von Ressourceninformationen des physischen Uplink-Steuerungskanals, PUCCH-Ressourceninformationen, zum Senden des HARQ-Feedbacks für die DCI der zweiten Stufe umfasst; oder
wenn die Planungsinformationen für die Neuübertragung dienen, aus einem Satz von Wertepaaren ausgewählt, wobei der Satz von Wertepaaren Wertepaare von PUCCH-Ressourceninformationen für die Neuübertragung des HARQ-Feedbacks für die DCI der zweiten Stufe und für die PUCCH-Ressourceninformationen für den zweiten PDSCH umfasst.

10. Verfahren nach Anspruch 8 oder 9, wobei der Indikator der HARQ-Feedback-Zeitsteuerung ein Wert ist, der einen Versatz zwischen einem Referenzschlitz und einem UL-Schlitz angibt, in dem ein Bestätigungsfeedback, ACK-Feedback, oder ein negatives Bestätigungsfeedback, NACK-Feedback, für die Datenübertragung geplant ist.

11. Verfahren nach Anspruch 10, wobei, wenn die Planungsinformationen zum Planen einer Neuübertragung (1180) der DCI der zweiten Stufe dienen, der Referenzschlitz ein DL-Schlitz ist, in dem die Datenübertragung auf dem zweiten PDSCH geplant ist.

12. Verfahren nach einem der Ansprüche 7 bis 11, wobei:
wenn sich eine PUCCH-Ressource des HARQ-Feedbacks für die DCI der zweiten Stufe und das HARQ-Feedback für den zweiten PDSCH im Zeitbereich nicht überlappen, Empfangen eines HARQ-Feedbacks durch die Basisstation auf zwei PUCCH; und
wenn sich die PUCCH-Ressource des HARQ-Feedbacks für die DCI der zweiten Stufe und ein HARQ-Feedback für den zweiten PDSCH in dem Zeitbereich überlappen, Empfangen des HARQ-Feedbacks durch die Basisstation auf dem PUCCH für die DCI der zweiten Stufe.

13. Vorrichtung, umfassend:
einen Prozessor; und
ein computerlesbares Speichermedium, auf dem computerausführbare Anweisungen gespeichert sind, die bei Ausführung bewirken, dass der Prozessor das Verfahren nach einem der Ansprüche 1 bis 12 durchführt.

14. Kommunikationssystem, umfassend eine Vorrichtung nach Anspruch 13, wenn auf einen der Ansprüche 1 bis 6 rückverwiesen wird, und eine Vorrichtung nach Anspruch 13, wenn auf einen der Ansprüche 7 bis 12 rückverwiesen wird.

15. Computerlesbares Medium, das computerausführbare Anweisungen speichert, die bei Ausführung durch einen Prozessor bewirken, dass der Prozessor das Verfahren nach einem der Ansprüche 1 bis 12 durchführt.

## Revendications

1. Procédé destiné à être utilisé pour recevoir des informations de commande de liaison descendante, DL DCI, à deux étages, comprenant :
la réception, par un équipement utilisateur, UE, (1120), dans un canal de commande de liaison descendante physique, PDCCH, de DCI de premier étage des DCI à deux étages, les DCI de premier étage comprenant :
des informations de planification pour des DCI de second étage des DCI à deux étages, dans lequel les informations de planification identifient un premier canal physique partagé de liaison descendante, PDSCH, qui est un canal physique sans transmission de données ; et
une indication indiquant si les informations de planification pour les DCI de second étage sont destinées à planifier une transmission initiale (1140) ou une retransmission (1180) des DCI de second étage ; **caractérisé en ce que**
lorsque les informations de planification sont destinées à planifier une transmission initiale (1140) des DCI de second étage, la réception, par l'UE (1120), dans les DCI de premier étage (1130), d'informations de configuration de demande de répétition automatique hybride, HARQ, destinées à une rétroaction HARQ pour la transmission initiale (1140) des DCI de second étage ; et
lorsque les informations de planification sont destinées à planifier une retransmission (1180) des DCI de second étage, la réception, par l'UE (1120), dans les DCI de premier étage (1170), d'informations de configuration HARQ destinées à une rétroaction HARQ pour la retransmission (1180) des DCI de second étage et d'informations de configuration HARQ destinées à une rétroaction HARQ pour un second PDSCH comprenant une transmission de données planifiée par la retransmission (1180) des DCI de second étage.

2. Procédé selon la revendication 1, dans lequel les informations de configuration HARQ sont :
lorsque les informations de planification sont destinées à la transmission initiale, sélectionnées parmi un ensemble de valeurs, l'ensemble de valeurs comprenant des valeurs de synchronisation de rétroaction HARQ pour les DCI de second étage ; ou
lorsque les informations de planification sont destinées à la retransmission, sélectionnées parmi un ensemble de paires de valeurs, l'ensemble de paires de valeurs comprenant des paires de valeurs de synchronisation de rétroaction HARQ destinées à la retransmission des DCI de second étage et à la synchronisation HARQ pour le second PDSCH.

3. Procédé selon la revendication 1 ou 2, dans lequel les informations de configuration HARQ sont :
lorsque les informations de planification sont destinées à la transmission initiale, sélectionnées parmi un ensemble de valeurs, l'ensemble de valeurs comprenant des valeurs d'informations de ressources de canal physique de commande de liaison montante, PUCCH, destinées à envoyer la rétroaction HARQ pour les DCI de second étage ; ou
lorsque les informations de planification sont destinées à la retransmission, sélectionnées parmi un ensemble de paires de valeurs, l'ensemble de paires de valeurs comprenant des paires de valeurs d'informations de ressources PUCCH destinées à la retransmission des DCI de second étage et aux informations de ressources PUCCH pour le second PDSCH.

4. Procédé selon les revendications 2 ou 3, dans lequel l'indicateur de synchronisation de rétroaction HARQ est une valeur indiquant un décalage entre un créneau de référence et un créneau UL où une rétroaction d'accusé de réception, ACK, ou une rétroaction d'accusé de réception négatif, NACK, est planifiée pour la transmission de données.

5. Procédé selon la revendication 4, dans lequel, lorsque les informations de planification sont destinées à planifier une retransmission (1180) des DCI de second étage, le créneau de référence est un créneau DL où la transmission de données est planifiée sur le second PDSCH.

6. Procédé selon l'une quelconque des revendications 1 à 5, dans lequel :
si une ressource PUCCH de la rétroaction HARQ pour les DCI de second étage et la rétroaction HARQ pour le second PDSCH ne se chevauchent pas dans le domaine temporel, la transmission, par l'UE, de la rétroaction HARQ sur deux PUCCH ; et
si la ressource PUCCH de la rétroaction HARQ pour les DCI de second étage et la rétroaction HARQ pour le second PDSCH se chevauchent dans le domaine temporel, la transmission de la rétroaction HARQ sur le PUCCH pour les DCI de second étage et ne pas transmettre la rétroaction HARQ pour le second PDSCH.

7. Procédé destiné à être utilisé pour transmettre des informations de commande de liaison descendante, DL DCI, à deux étages, comprenant :
la transmission, par une station de base (1110), dans un canal physique de commande de liaison descendante, PDCCH, de DCI de premier étage des DCI à deux étages, les DCI de premier étage comprenant :
des informations de planification pour des DCI de second étage des DCI à deux étages, dans lequel les informations de planification identifient un premier canal physique partagé de liaison descendante, PDSCH, qui est un canal physique sans transmission de données ; et
une indication indiquant si les informations de planification pour les DCI de second étage sont destinées à planifier une transmission initiale (1140) ou une retransmission (1180) des DCI de second étage ; **caractérisé en ce que**
lorsque les informations de planification sont destinées à planifier une transmission initiale (1140) des DCI de second étage, la transmission, par la station de base (1110), dans les DCI de premier étage (1130), d'informations de configuration de demande de répétition automatique hybride, HARQ, destinées à une rétroaction HARQ pour une transmission initiale (1140) des DCI de second étage ; et
lorsque les informations de planification sont destinées à planifier une retransmission (1180) des DCI de second étage, la transmission, par la station de base (1110), dans les DCI de premier étage (1170), d'informations de configuration HARQ destinées à une rétroaction HARQ pour une retransmission (1180) des DCI de second étage et d'informations de configuration HARQ destinées à une rétroaction HARQ pour un second PDSCH comprenant une transmission de données planifiée par la retransmission (1180) des DCI de second étage.

8. Procédé selon la revendication 7, dans lequel les informations de configuration HARQ sont :
lorsque les informations de planification sont destinées à la transmission initiale, sélectionnées parmi un ensemble de valeurs, l'ensemble de valeurs comprenant des valeurs de synchronisation de rétroaction HARQ pour les DCI de second étage ; ou
lorsque les informations de planification sont destinées à la retransmission, sélectionnées parmi un ensemble de paires de valeurs, l'ensemble de paires de valeurs comprenant des paires de valeurs de synchronisation de rétroaction HARQ destinées à la retransmission des DCI de second étage et à la synchronisation HARQ pour le second PDSCH.

9. Procédé selon la revendication 7 ou 8, dans lequel les informations de configuration HARQ sont :
lorsque les informations de planification sont destinées à la transmission initiale, sélectionnées parmi un ensemble de valeurs, l'ensemble de valeurs comprenant des valeurs d'informations de ressources de canal physique de commande de liaison montante, PUCCH, destinées à envoyer la rétroaction HARQ pour les DCI de second étage ; ou
lorsque les informations de planification sont destinées à la retransmission, sélectionnées parmi un ensemble de paires de valeurs, l'ensemble de paires de valeurs comprenant des paires de valeurs d'informations de ressources PUCCH destinées à la retransmission de la rétroaction HARQ pour les DCI de second étage et aux informations de ressources PUCCH pour le second PDSCH.

10. Procédé selon les revendications 8 ou 9, dans lequel l'indicateur de synchronisation de rétroaction HARQ est une valeur indiquant un décalage entre un créneau de référence et un créneau UL où une rétroaction d'accusé de réception, ACK, ou une rétroaction d'accusé de réception négatif, NACK, est planifiée pour la transmission de données.

11. Procédé selon la revendication 10, dans lequel, lorsque les informations de planification sont destinées à planifier une retransmission (1180) des DCI de second étage, le créneau de référence est un créneau DL où la transmission de données est planifiée sur le second PDSCH.

12. Procédé selon l'une quelconque des revendications 7 à 11, dans lequel :
si une ressource PUCCH de la rétroaction HARQ pour les DCI de second étage et la rétroaction HARQ pour le second PDSCH ne se chevauchent pas dans le domaine temporel, la réception, par la station de base, de la rétroaction HARQ sur deux PUCCH ; et
si la ressource PUCCH de la rétroaction HARQ pour les DCI de second étage et la rétroaction HARQ pour le second PDSCH se chevauchent dans le domaine temporel, la réception, par la station de base, de la rétroaction HARQ sur le PUCCH pour les DCI de second étage.

13. Dispositif comprenant :
un processeur ; et
un support lisible par ordinateur sur lequel sont stockées des instructions exécutables par ordinateur, qui lorsqu'elles sont exécutées, amènent le processeur à réaliser le procédé selon l'une quelconque des revendications 1 à 12.

14. Système de communication comprenant un dispositif selon la revendication 13 lorsqu'il se réfère à l'une quelconque des revendications 1 à 6, et un dispositif selon la revendication 13 lorsqu'il se réfère à l'une quelconque des revendications 7 à 12.

15. Support lisible par ordinateur stockant des instructions exécutables par ordinateur qui, lorsqu'elles sont exécutées par un processeur, amènent le processeur à réaliser le procédé selon l'une quelconque des revendications 1 à 12.
